# EUROPÄISCHE PATENTSCHRIFT

(11) **EP 4 015 575 B1**
(45) Veröffentlichungstag und Bekanntmachung des Hinweises auf die Patenterteilung: **18.11.2026**
(21) Anmeldenummer: 20215157.7
(22) Anmeldetag: 17.12.2020
(51) Int. Cl.: C08K 3/013, C08K 5/00, C08K 5/56, C08K 7/00, C08L 77/06

(54) **GEFÜLLTE POLYAMID-FORMMASSEN, HIERAUS HERGESTELLTE FORMKÖRPER UND VERWENDUNG DER GEFÜLLTEN POLYAMID-FORMMASSEN**
FILLED POLYAMIDE MOULDING MATERIALS, MOULDINGS PRODUCED THEREFROM AND USE OF THE FILLED POLYAMIDE MOULDING MATERIALS
MATIÈRES À MOULER EN POLYAMIDE REMPLIES, CORPS MOULÉS FABRIQUÉS À PARTIR DE CELLES-CI ET UTILISATION DES MATIÈRES À MOULER EN POLYAMIDE REMPLIES

(43) Veröffentlichungstag der Anmeldung: 22.06.2022
(73) Patentinhaber: EMS-CHEMIE AG, 7013 Domat/Ems (CH)
(72) Erfinder: ALKAN, Arda, 7013 Domat/Ems (CH); CADALBERT, Andri, 7402 Bonaduz (CH); BAYER, Andreas, 7013 Domat/Ems (CH); HOFFMANN, Botho, 7013 Domat/Ems (CH)
(74) Vertreter: Pfenning, Meinig & Partner mbB

(56) Entgegenhaltungen:
- EP-A1- 2 535 365
- CN-A- 110 408 198
- DATABASE CA [online] CHEMICAL ABSTRACTS SERVICE, COLUMBUS, OHIO, US; 5 November 2019 (2019-11-05), CHEN, XI ET AL: "High dimensional stability low moisture permeability polyamide film and preparation method thereof", XP002803102, retrieved from STN Database accession no. 2019:2079926

## Beschreibung

Die vorliegende Erfindung betrifft gefüllte Polyamid-Formmassen mit hoher Wärmealterungsbeständigkeit, welche neben einer spezifischen Polyamidmischung mindestens einen Füllstoff, mindestens ein unsubstituiertes oder substituiertes Metallocen und gegebenenfalls mindestens einen Zusatzstoff enthalten. Ebenso betrifft die Erfindung die Verwendung dieser Polyamid-Formmassen zur Herstellung von Formkörpern.

Polyamide können als Werkstoffe für Formkörper eingesetzt werden, die während ihrer Lebensdauer erhöhten Temperaturen ausgesetzt sind. Die Verbesserung der Wärmealterungsbeständigkeit von Polyamiden ist überaus wünschenswert, da dadurch längere Lebenszeiten für thermisch belastete Bauteile erreicht werden können bzw. deren Ausfallrisiko gesenkt werden kann. Alternativ kann eine verbesserte Wärmealterungsbeständigkeit auch den Einsatz der Bauteile bei höheren Temperaturen ermöglichen.

Thermoplastische Polyamide können als Konstruktionswerkstoffe für Bauteile eingesetzt werden, die während ihrer Lebensdauer erhöhten Temperaturen ausgesetzt sind. Da es hierbei zu thermooxidativen Schädigungen kommt, werden Wärmestabilisatoren eingesetzt, die das Auftreten der thermooxidativen Schädigung hinauszögern.

Langzeitwärmestabilisierte Polyamid-Formmassen sind aus der EP 2 535 365 A1 bekannt, worin Formmassen auf Basis eines teilaromatischen Polyamids und Caprolactam gearbeitet werden, die mit Kupferstabilisatoren bzw. mit Mischungen aus Kupfer- und organischen Stabilisatoren versehen sind.

Auch die EP 2 902 444 A1 betrifft langzeitwärmestabilisierte Formmassen auf Basis eines teilaromatischen Polyamids und Caprolactam. Die Langzeitwärmestabilisierung wird hier durch die Verwendung von organischen Stabilisatoren erreicht.

Ebenso beschreibt die EP 1 681 313 A1 langzeitwärmestabilisierte Formmassen. Die Langzeitwärmestabilisierung wird hier durch die Verwendung von mindestens zwei speziellen Wärmestabilisatoren (z.B. Kupferiodid und Eisenoxid) und durch Einsatz von zwei Polyamiden, die sich im Schmelzpunkt um zumindest 20 °C unterscheiden, erreicht.

CN 110 408 198 A beschreibt Zusammensetzungen enthaltend Polyamide, metallorganische Verbindungen basierend auf Eisen, Kupfer, Calcium oder Titan sowie Zusatzstoffe, die für Folien oder Filme verwendet werden.

Ausgehend hiervon war es Aufgabe der vorliegenden Erfindung, Polyamid-Formmassen zur Verfügung zu stellen, aus denen bevorzugt Formkörper hergestellt werden können, die sich insbesondere gegenüber aus dem Stand der Technik bekannten Polyamid-Formmassen durch eine verbesserte Wärmealterungsbeständigkeit auszeichnen.

Diese Aufgabe wird durch die Polyamid-Formmasse mit den Merkmalen des Anspruchs 1 und die Formkörper mit den Merkmalen des Anspruchs 13 gelöst. Die weiteren abhängigen Ansprüche zeigen vorteilhafte Weiterbildungen auf. In Anspruch 15 werden erfindungsgemäße Verwendungen angegeben.

Erfindungsgemäß wird eine Polyamid-Formmasse enthaltend oder bestehend aus den folgenden Komponenten (A) bis (D) bereitgestellt:
(A) 27 bis 89,99 Gew.-% mindestens eines teilkristallinen, teilaromatischen Polyamids (A1) oder einer Polyamidmischung bestehend aus
   (A1) mindestens einem teilkristallinen, teilaromatischen Polyamid, und
   (A2) mindestens einem caprolactamhaltigen Polyamid mit einem Gehalt an Caprolactam von wenigstens 50 Gew.-%, verschieden vom teilkristallinen, teilaromatischen Polyamid (A1)
   wobei der Caprolactamgehalt, bezogen auf die Polyamidmischung, 5 bis 38 Gew.-% beträgt,
(B) 10 bis 65 Gew.-% mindestens eines Füllstoffes,
(C) 0,01 bis 3,0 Gew.-% mindestens eines unsubstituierten oder substituierten Metallocens,
(D) 0 bis 35 Gew.-% mindestens eines Zusatzstoffes,
wobei sich die Komponenten (A) bis (D) auf 100 Gew.-% ergänzen.

Überraschenderweise konnte festgestellt werden, dass durch den Einsatz von Metallocenen, insbesondere Ferrocenen in Verbindung mit dem ausgewählten mindestens einem teilkristallinen, teilaromatischen Polyamid oder den ausgewählten Polyamidmischungen eine signifikant verbesserte Wärmealterungsbeständigkeit erzielt werden kann.

Des Weiteren zeigten die ferrocenhaltigen, erfindungsgemäßen Polyamid-Formmassen eine deutlich verbesserte Fließfähigkeit im Spiralfließtest.

### Begriffsdefinitionen

### • Schreibweisen und Abkürzungen für Polyamide und deren Monomere

Im Sinne der vorliegenden Erfindung wird unter dem Begriff "Polyamid" (Abkürzung PA) ein Oberbegriff verstanden, dieser umfasst Homopolyamide und Copolyamide. Die gewählten Schreibweisen und Abkürzungen für Polyamide und deren Monomere entsprechen den in der ISO-Norm 16396-1 (2015, (D)) festgelegten. Die darin verwendeten Abkürzungen werden im Folgenden synonym zu den IUPAC Namen der Monomere verwendet. Insbesondere kommen folgende Abkürzungen für Monomere in der vorliegenden Anmeldung vor: 6 für 1,6-Hexandiamin (CAS-Nr. 124-09-4), T für Terephthalsäure (CAS-Nr. 100-21-0), I für Isophthalsäure (CAS-Nr. 121-95-5), 6 für 1,6-Hexandisäure (CAS-Nr. 124-04-9), 6 für Caprolactam (CAS-Nr. 105-60-2), MACM für Bis(4-amino-3-methyl-cyclohexyl)methan (auch als 3,3'-Dimethyl-4,4'-diaminodicyclohexylmethan bezeichnet, CAS-Nr. 6864-37-5), TMDC für Bis(4-amino-3,5-dimethyl-cyclohexyl)methan (auch als 3,3',5,5'-Tetramethyl-4,4'-diaminodicyclohexylmethan bezeichnet, CAS-Nr. 65962-45-0), PACM für Bis(4-amino-cyclohexyl)methan (auch als 4,4'-Diaminodicyclohexylmethan bezeichnet, CAS-Nr. 1761-71-3), BAC für 1,3-Bis(aminomethyl)-cyclohexan (auch als 1,3-Cyclohexandimethanamin bezeichnet, CAS-Nr. 2579-20-6) und für 1,4-Bis(aminomethyl)-cyclohexan (auch als 1,4-Cyclohexandimethanamin bezeichnet, CAS-Nr. 2549-93-1) und für deren Mischungen, IPD für Isophorondiamin (auch als 3-(Aminomethyl)-3,5,5-trimethylcyclohexanamin, 1-Amino-3-aminomethyl-3,5,5-trimethylcyclohexan oder Cyclohexan-methanamin,5-amino-1,3,5,5-trimethyl- bezeichnet, CAS-Nr. 2855-13-2), MPMD für 2-Methyl-1,5-Pentandiamin (auch als 1,5-Diamino-2-methylpentan bezeichnet, CAS-Nr. 15520-10-2), MOD für 2-Methyl-1,8-octandiamin (auch als 2-Methyloctane-1,8-diamine bezeichnet, CAS-Nr. 148528-05-6), 12 für Dodecandisäure (auch als 1,10-Decandicarbonsäure bezeichnet, CAS-Nr. 693-23-2), CHD für Cyclohexandicarbonsäure, 12 für Lactam-12 (auch als Laurinlactam bezeichnet, CAS-Nr. 947-04-6).

### • Allgemeines zu den Zusammensetzungen

Die Begriffe "enthaltend" und "umfassend" in den vorliegenden Ansprüchen und in der Beschreibung bedeuten, dass weitere Komponenten nicht ausgeschlossen sind. Im Rahmen vorliegender Erfindung ist der Begriff "bestehend aus" als bevorzugte Ausführungsform der Begriffe "enthaltend" oder "umfassend" zu verstehen. Wenn definiert wird, dass ein Gruppe mindestens eine bestimmte Anzahl von Komponenten "enthält" oder diese "umfasst", ist dies auch so zu verstehen, dass eine Gruppe offenbart wird, die vorzugsweise aus diesen Komponenten "besteht".

### • Mengenangaben der Monomere

Enthalten die Polyamide (A1) nur Disäuren und Diamine so ergänzen sich deren molare Anteile auf 50 Mol-% für die Summe alle Diamine und 50 Mol-% für die Summe alle Disäuren und die Summe der Diamin- und Disäure-Anteile ergibt 100 Mol-% für das Polyamid.

Enthalten die Polyamide (A1) oder (A2) neben Disäuren und Diaminen auch Lactame oder ω-Aminosäuren zu x Mol-%, so beträgt die Summe aller Diamine nur noch (50 - 0,5 x) Mol-% und Summe aller Disäuren (50 - 0,5 x) Mol-%, bezogen auf 100 Mol-% Polyamid.

Bei den Mengenangaben zu den Disäuren und Diaminen der Polyamide gilt immer, dass die Summe der molaren Anteile aller Diamine gleich der Summe der molaren Anteile aller Disäuren ist.

### • Allgemeines zu den Mengenangaben

Die Polyamid-Formmassen gemäß der vorliegenden Erfindung enthalten oder bestehen aus den Komponenten (A), (B) und (C) sowie gegebenenfalls (D), es gilt dabei die Maßgabe, dass sich die Komponenten (A), (B), (C) und (D) in Summe auf 100 Gew.-% ergänzen, wobei sich die Komponente (A) aus der Komponente (A1) und gegebenenfalls der Komponente (A2) zusammensetzt. Die festgelegten Bereiche der Mengenangaben für die einzelnen Komponenten (A), (B), (C) und (D) sind so zu verstehen, dass innerhalb der vorgegebenen Bereiche eine willkürliche Menge für jede der Einzelkomponenten ausgewählt werden kann, sofern die Maßgabe erfüllt wird, dass die Summe aller Komponenten (A), (B), (C) und (D) 100 Gew.-% ergibt.

### • Teilaromatische Polyamide

Im Sinne der vorliegenden Erfindung sind teilaromatische Polyamide solche Polyamide die mindestens ein aromatisches Monomer enthalten. Bevorzugt ist dieses mindestens eine aromatische Monomer eine Dicarbonsäure. Im Sinne der vorliegenden Erfindung handelt es sich bei Metaxylylendiamin (MXD, CAS-Nr. 1477-55-0) und Paraxylylendiamin (PXD, CAS-Nr. 539-48-0) nicht um aromatische Monomere. Dies gilt auch für alle anderen Monomere, bei denen die Amino- bzw. Carboxygruppen nicht direkt am aromatischen Ring hängen. Die teilkristallinen, teilaromatischen Polyamide der vorliegenden Erfindung besitzen eine Schmelztemperatur und eine Schmelzwärme, welche mit der dynamischen Differenz-Kalorimetrie (engl. Differential Scanning Calorimetry, DSC) nach ISO 11357-3 (2013) bestimmt werden können.

### • Metallocene

Bei den Metallocenen handelt es sich um Koordinationsverbindungen und zwar um Komplexe, sogenannte Sandwich-Komplexe. Es handelt sich daher weder um ein Metalloxid noch um ein Metallsalz.

Ein Vertreter ist beispielsweise unsubstituiertes oder substituiertes Bis(η⁵-cyclopentadienyl)eisen. Bis(η⁵-cyclopentadienyl)eisen wird auch als Ferrocen bezeichnet (CAS-Nr. 102-54-5). Beide Bezeichnungen werden in dieser Anmeldung synonym verwendet.

### • Wärmealterungsbeständigkeit

Eine gute Wärmealterungsbeständigkeit zeigt sich in der Verlangsamung des Abfalls der Reissfestigkeit und/oder der Reissdehnung nach Lagerung des Formkörpers bei erhöhten Temperaturen, d.h. Temperaturen von mindestens 100 °C, bevorzugt mindestens 120 °C, besonders bevorzugt mindestens 140 °C.

### Polyamid-Formmasse

Die erfindungsgemäße Polyamid-Formmasse enthält die Komponenten (A), (B) und (C) sowie gegebenenfalls (D) oder besteht aus diesen, wobei sich die Komponente (A) aus der Komponente (A1) und gegebenenfalls der Komponente (A2) zusammensetzt.

Die Polyamid-Formmasse, enthält die folgenden Komponenten oder besteht daraus:
(A) 27 bis 89,99 Gew.-% mindestens eines teilkristallinen, teilaromatischen Polyamids (A1) oder einer Polyamidmischung bestehend aus
   (A1) mindestens einem teilkristallinen, teilaromatischen Polyamid, und
   (A2) einem oder mehreren caprolactamhaltigen Polyamiden mit einem Gehalt an Caprolactam von wenigstens 50 Gew.-%, verschieden vom teilkristallinen, teilaromatischen Polyamid (A1)
   wobei der Caprolactamgehalt, bezogen auf die Polyamidmischung, 5 bis 38 Gew.-% beträgt,
(B) 10 bis 65 Gew.-% mindestens eines Füllstoffes,
(C) 0,01 bis 3,0 Gew.-% mindestens eines unsubstituierten oder substituierten Metallocens,
(D) 0 bis 35 Gew.-% mindestens eines Zusatzstoffes,
wobei sich die Komponenten (A) bis (D) auf 100 Gew.-% ergänzen.

Der Anteil von Komponente (A) in der Polyamid-Formmasse liegt bevorzugt im Bereich von 35 bis 84,87 Gew.-%, besonders bevorzugt im Bereich von 44,6 bis 69,6 Gew.-%, bezogen auf das Gesamtgewicht der Polyamid-Formmasse.

Der Anteil von Komponente (B) in der Polyamid-Formmasse liegt bevorzugt im Bereich von 15 bis 60 Gew.-%, besonders bevorzugt im Bereich von 30 bis 50 Gew.-%, bezogen auf das Gesamtgewicht der Polyamid-Formmasse.

Der Anteil von Komponente (C) in der Formmasse liegt bevorzugt im Bereich von 0,03 bis 2,0 Gew.-%, besonders bevorzugt von 0,1 bis 1,5 Gew.-%, bezogen auf das Gesamtgewicht der Polyamid-Formmasse.

Der Anteil von Komponente (D) in der Formmasse liegt bevorzugt im Bereich von 0,1 bis 30 Gew.-%, besonders bevorzugt von 0,3 bis 25 Gew.-%, bezogen auf das Gesamtgewicht der Polyamid-Formmasse.

Der Caprolactamgehalt, bezogen auf Polyamidmischung (A), d.h. auf die Summe der Komponenten (A1) und (A2), liegt bevorzugt im Bereich von 5 bis 36 Gew.-%, besonders bevorzugt im Bereich von 10 bis 33 Gew.-%, ganz besonders bevorzugt im Bereich von 15 bis 30 Gew.-%.

Im Folgenden werden die einzelnen Komponenten der erfindungsgemäßen Polyamid-Formmasse näher beschrieben.

### Komponente (A)

Die Komponente (A) setzt sich aus der Komponente (A1) und gegebenenfalls der Komponente (A2) zusammen.

### Komponente (A1)

Gemäß einer bevorzugten Ausführungsform der vorliegenden Erfindung besitzt das mindestens eine teilkristalline, teilaromatische Polyamid (A1):
- eine relative Viskosität (RV), gemessen nach EN ISO 307 (2007), von 1,45 bis 2,10, bevorzugt von 1,50 bis 1,90, besonders bevorzugt von1,55 bis 1,80, und/oder
- eine Schmelzwärme, gemessen nach EN ISO 11357-3 (2013), von mindestens 25 J/g, bevorzugt mindestens 30 J/g, besonders bevorzugt mindestens 35 J/g, und/oder
- eine Schmelztemperatur, gemessen nach EN ISO 11357-3 (2013), von mindestens 255 °C, bevorzugt 270 °C bis 350 °C, besonders bevorzugt von 280 bis 340 °C.

Gemäß einer bevorzugten Ausführungsform der vorliegenden Erfindung ist das mindestens eine teilkristalline, teilaromatische Polyamid (A1) gebildet ist aus den Monomeren (a1.1) bis (a1.2) und gegebenenfalls (a1.3) und gegebenenfalls (a1.4):
(a1.1) mindestens eines Diamins, ausgewählt aus der Gruppe bestehend aus 1,4-Butandiamin, 1,5-Pentandiamin, 1,6-Hexandiamin, 1,8-Octandiamin, 1,9-Nonandiamin, 1,10-Decandiamin, 1,12-Dodecandiamin, 2-Methyl-1,5-Pentandiamin, 2-Methyl-1,8-octandiamin, Bis(4-aminocyclohexyl)methan, Bis(4-amino-3-methyl-cyclohexyl)methan, Bis(4-amino-3,5-dimethyl-cyclohexyl)methan, Bis(aminomethyl)cyclohexan, Isophorondiamin, m-Xylylendiamin und p-Xylylendiamin, und
(a1.2) mindestens einer aromatischen Dicarbonsäure, ausgewählt aus der Gruppe bestehend aus Terephthalsäure, Isophthalsäure und Naphthalindicarbonsäure, und/oder
(a1.3) mindestens einer Dicarbonsäure, ausgewählt aus der Gruppe bestehend aus 1,6-Hexandisäure, 1,9-Nonandisäure, 1,10-Decandisäure, 1,12-Dodecandisäure, 1,13-Tridecandisäure, 1,14-Tetradecan-disäure, 1,15-Pentadecansäure, 1,16-Hexadecandisäure, 1,17-Heptadecandisäure, 1,18-Octadecandisäure, Cyclohexandicarbonsäure und dimere Fettsäure mit 36 oder 44 C-Atomen, und/oder
(a1.4) einem oder mehreren Lactamen oder ω-Aminosäuren, ausgewählt aus der Gruppe bestehend aus Lactam-6, Lactam-11, Lactam-12, 1,6-Aminohexansäure, 1,11-Aminoundecansäure und 1,12-Aminododecansäure.

Gemäß einer besonders bevorzugten Ausführungsform der vorliegenden Erfindung ist das mindestens eine teilkristalline, teilaromatische Polyamid (A1) gebildet ist aus den Monomeren (a1.1) bis (a1.2) und gegebenenfalls (a1.3) und gegebenenfalls (a1.4):
(a1.1) mindestens eines Diamins, ausgewählt aus der Gruppe bestehend aus 1,4-Butandiamin, 1,5-Pentandiamin, 1,6-Hexandiamin, 1,8-Octandiamin, 1,9-Nonandiamin, 1,10-Decandiamin, 1,12-Dodecandiamin, 2-Methyl-1,5-Pentandiamin, 2-Methyl-1,8-octandiamin, Bis(4-aminocyclohexyl)methan, Bis(4-amino-3-methyl-cyclohexyl)methan und Bis(aminomethyl)cyclohexan, und
(a1.2) mindestens einer aromatischen Dicarbonsäure, ausgewählt aus der Gruppe bestehend aus Terephthalsäure und Isophthalsäure, und/oder
(a1.3) mindestens einer Dicarbonsäure, ausgewählt aus der Gruppe bestehend aus 1,6-Hexandisäure, 1,10-Decandisäure, 1,12-Dodecandisäure und 1,16-Hexadecandisäure, und/oder
(a1.4) einem oder mehreren Lactamen oder ω-Aminosäuren, ausgewählt aus der Gruppe bestehend aus Lactam-6, Lactam-12, 1,6-Aminohexansäure und 1,12-Aminododecansäure.

Gemäß einer ganz besonders bevorzugten Ausführungsform der vorliegenden Erfindung ist das mindestens eine teilkristalline, teilaromatische Polyamid (A1) gebildet ist aus den Monomeren (a1.1) bis (a1.2) und gegebenenfalls (a1.3):
(a1.1) mindestens eines Diamins, ausgewählt aus der Gruppe bestehend aus 1,6-Hexandiamin, 1,10-Decandiamin und Bis(aminomethyl)cyclohexan, und
(a1.2) mindestens einer aromatischen Dicarbonsäure, ausgewählt aus der Gruppe bestehend aus Terephthalsäure und Isophthalsäure, und/oder
(a1.3) mindestens einer Dicarbonsäure, ausgewählt aus der Gruppe bestehend aus 1,6-Hexandisäure, 1,10-Decandisäure und 1,12-Dodecandisäure.

Gemäß einer weiteren bevorzugten Ausführungsform der vorliegenden Erfindung enthält das mindestens eine teilkristalline, teilaromatische Polyamid (A1):
- mindestens 10 Mol-%, bevorzugt mindestens 20 Mol-%, besonders bevorzugt mindestens 25 Mol-% 1,6-Hexandiamin, und
- mindestens 10 Mol-%, bevorzugt mindestens 20 Mol-%, besonders bevorzugt mindestens 25 Mol-% Terephthalsäure.

Gemäß einer weiteren bevorzugten Ausführungsform der vorliegenden Erfindung ist das mindestens eine teilkristalline, teilaromatische Polyamid (A1) ausgewählt aus der Gruppe bestehend aus:
- PA 4T/66, PA 4T/6T, PA 4T/8T, PA 6T/8T, PA 4T/MPMDT, PA 4T/6T/MPMDT, PA 4T/41, PA 4T/6I, PA 5T/5I, PA 6T/MPMDT, PA 6T/MPMDT/6I, PA 6T/6I, PA 6T/66, PA 6T/6, PA 6T/12, PA 6T/66/6, PA 6T/610, PA 6T/612, PA 6T/10I, PA 6T/9T, PA 6T/12T, PA 6T/6I/6, PA 6T/6I/66, PA 6T/6I/612, PA 6T/6I/12, PA 9T/MODT, PA 9T/9I, PA 10T, PA 12T, PA 12T/12I, PA 10T/1012, PA 10T/6T, PA 10T/10I, PA10T/106, PA10T/12, PA10T/11, PA 10T/6T/612, PA 10T/6T/10I/6I, PA 10T/6T/1012/612, PA 6T/BACT, PA 6T/BACT/66, PA 6T/6I/BACT/BACI, PA 6T/BACT/MACMT, PA 6T/BACT/PACMT, PA 6T/BACT/TMDCT, PA 4T/6T/8T, PA 4T/6T/10T, PA 4T/8T/10T, PA 6T/8T/10T und deren Copolyamiden,
- besonders bevorzugt ausgewählt aus der Gruppe bestehend aus PA 6T/MPMDT, PA 6T/6I, PA 6T/66, PA 6T/6, PA 6T/12, PA 6T/66/6, PA 6T/6I/6, PA 6T/6I/66, PA 6T/6I/612, PA 9T/MODT, PA 10T, PA 12T, PA 10T/1012, PA 10T/6T, PA 10T/10I, PA 10T/6T/612, PA 10T/6T/10I/6I, PA 10T/6T/1012/612, PA 6T/BACT, PA 6T/BACT/66, PA 6T/BACT/MACMT und PA 6T/BACT/PACMT,
- ganz besonders bevorzugt ausgewählt aus der Gruppe bestehend aus PA 6T/6I, PA 6T/66, PA 6T/66/6, PA 6T/6I/66, PA 6T/6I/612, PA 10T/1012, PA 10T/6T, PA 10T/6T/612, PA 10T/6T/10I/6I, PA 10T/6T/1012/612, PA 6T/BACT und PA 6T/BACT/66.

Gemäß einer weiteren bevorzugten Ausführungsform der vorliegenden Erfindung ist das mindestens eine teilkristalline, teilaromatische Polyamid (A1) frei von Lactamen und ω-Aminosäuren.

Gemäß einer weiteren bevorzugten Ausführungsform der vorliegenden Erfindung ist das teilkristalline, teilaromatische Polyamid (A1) PA 6T/66, gebildet aus:
- 50 Mol-% 1,6-Hexandiamin,
- 14 bis 40 Mol-%, bevorzugt 20 bis 35 Mol-%, besonders bevorzugt 25 bis 30 Mol-% Terephthalsäure, und
- 10 bis 36 Mol-%, bevorzugt 15 bis 30 Mol-%, besonders bevorzugt 20 bis 25 Mol-% 1,6-Hexansäure.

### Komponente (A2)

Das caprolactamhaltige Polyamid (A2) besteht bevorzugt zu mindestens 60 Gew.-%, besonders bevorzugt zu mindestens 70 Gew.-%, ganz besonders bevorzugt zu mindestens 80 Gew.-% aus Caprolactam.

Für den Fall, dass es sich bei der Komponente (A2) um ein Copolymer handelt, sind bevorzugte Comonomere für (A2), die neben Caprolactam eingesetzt werden, zum einen Kombinationen von Diaminen und Dicarbonsäuren, die bevorzugt äquimolar oder nahezu äquimolar eingesetzt werden, und zum anderen Lactame und Aminocarbonsäuren.

Geeignete Diamine sind insbesondere verzweigte oder lineare aliphatische Diamine mit 4 bis 18 C-Atomen. Geeignete Dicarbonsäuren mit 6 bis 36 Kohlenstoffatomen sind insbesondere aliphatische, cycloaliphatische oder aromatische Dicarbonsäuren.

Gemäß einer bevorzugten Ausführungsform handelt es sich beim C4-C18-Diamin um mindestens ein Diamin ausgewählt aus der Gruppe bestehend aus:
- 1,4-Butandiamin, 1,5-Pentandiamin, 2-Methylpentandiamin, 1,6-Hexandiamin, 1,7-Heptandiamin 1,8-Octandiamin, 1,9-Nonandiamin, Methyl-1,8-Octandiamin, 2,2,4-Trimethylhexandiamin, 2,4,4-Trimethylhexandiamin, 1,10-Decandiamin, 1,11-Undecandiamin, 1,12-Dodecandiamin, 1,13-Tridecandia¬min, 1,14-Tetradecandiamin, 1,15-Pentadecandiamin, 1,16-Hexadecandiamin, 1,17-Heptadecandiamin, 1,18-Octadecandiamim, Bis(4-amino-cyclohexyl)methan, 2,2-(4,4'-Diaminodicyclohexyl)propan, Bis(4-amino-3-methylcyclohexyl)methan, m-Xylylendiamin und p-Xylylendiamin,
- bevorzugt 1,6-Hexandiamin, 1,10-Decandiamin und 1,12-Dodecandiamin,
- besonders bevorzugt 1,6-Hexandiamin und 1,10-Decandiamin.

Gemäß einer besonders bevorzugten Ausführungsform handelt es sich beim C4-C18-Diamin um 1,6-Hexandiamin.

Gemäß einer bevorzugten Ausführungsform der Erfindung handelt es sich bei der Dicarbonsäure um mindestens eine Dicarbonsäure ausgewählt aus der Gruppe bestehend aus:
- 1,6-Hexandisäure, 1,8- Octandisäure, 1,9-Nonandisäure, 1,10-Decandisäure, 1,11-Undecandisäure, 1,12-Dodecandisäure, 1,13-Tridecandisäure, 1,14-Tetradecandisäure, 1,15-Pentadecansäure, 1,16-Hexadecandisäure, 1,17-Heptadecandisäure, 1,18-Octadecandisäure, Cyclohexandicarbonsäure, dimere Fettsäure mit 36 oder 44 C-Atomen, Terephthalsäure, Isophthalsäure und Naphthalindicarbonsäure ,
- bevorzugt 1,6-Hexandisäure, 1,10-Decandisäure, 1,11-Undecandisäure, 1,12-Dodecandisäure, Terephthalsäure und Isophthalsäure,
- besonders bevorzugt 1,6-Hexandisäure und Terephthalsäure.

Gemäß einer besonders bevorzugten Ausführungsform der Erfindung handelt es sich bei der Dicarbonsäure um Adipinsäure.

Weitere bevorzugte Comonomere für das Polyamid (A2) sind Lactame oder Aminocarbonsäuren mit 7 bis 12 Kohlenstoffatomen, wobei Lactam-12 und/oder 1,12-Aminododecansäure besonders bevorzugt werden.

In einer weiteren besonders bevorzugten Ausführungsform der Erfindung ist das mindestens eine caprolactamhaltige Polyamid (A2) ausgewählt aus der Gruppe bestehend aus:
- PA 6, PA 6/12, PA 6/6T, PA 6/6I, PA 6/66, PA 6/610, PA 6/612, PA 6/616, PA 6/10T, PA 6/10I, PA 6/106, PA 6/1010, PA 6/1012, PA 6/1016, PA 6/611, PA 6/1011, PA 6/126, PA 6/12T, PA 6/12I, PA 6/1210, PA 6/1212, PA 6/1216, PA 6/66/69, PA 6/66/610, PA 6/66/6T, PA 6/66/6I, PA 6/66/612, PA 6/66/616, PA 6/6T/69, PA 6/6T/610, PA 6/6T/6I, PA 6/6T/612, PA 6/6T/616, PA 6/6I/69, PA 6/6I/610, PA 6/6I/612, PA 6/6I/616 und deren Copolyamiden,
- besonders bevorzugt PA 6, PA 6/12, PA 6/6T, PA 6/6I, PA 6/66, PA 6/610,
   PA 6/612, PA 6/616, PA 6/10T, PA 6/10I, PA 6/106, PA 6/1010, PA 6/1012, PA 6/1016, PA 6/611, PA 6/1011, PA 6/126, PA 6/12T, PA 6/12I, PA 6/1210, PA 6/1212 und PA 6/1216,
- ganz besonders bevorzugt PA 6, PA 6/12, PA 6/6T, PA 6/6I, PA 6/66, PA 6/610, PA 6/612, PA 6/616, PA 6/10T und PA 6/10I.

Bei den caprolactamhaltigen Polyamiden (A2) handelt es sich ganz besonders bevorzugt um teilkristalline, aliphatische Polyamide.

Das caprolactamhaltige Polyamid (A2) hat bevorzugt eine relative Viskosität (RV), gemessen nach EN ISO 307 (2007) im Bereich von 1,6 bis 3,0, besonders bevorzugt im Bereich von 1,7 bis 2,5, ganz besonders bevorzugt im Bereich von 1,8 bis 2,2.

### Komponente (B)

Der Begriff Füllstoffe (Komponente(B)) umfasst faserförmige Füllstoffe, nadelförmige Füllstoffe, teilchenförmige Füllstoffe und Mischungen davon.

Die Füllstoffe können vorzugsweise beschichtet oder oberflächenbehandelt sein, d.h. sie können mit einem geeigneten Schlichte- oder Haftvermittlersystem ausgerüstet oder anderweitig oberflächenaktiviert sein. Dazu können zum Beispiel Systeme auf Basis von Urethanen, Silanen, Epoxiden, Polyamiden, Polyhydroxyether, Acrylaten respektive Kombinationen oder Mischungen davon verwendet werden. Die Schlichte- oder Haftvermittlersysteme können auch noch andere Hilfsmittel wie zum Beispiel Antistatika oder Gleitmittel enthalten.

Die faser- oder nadelförmigen Füllstoffe sind ausgewählt aus der Gruppe bestehend aus Glasfasern, Kohlenstofffasern, Basaltfasern, Borfasern, Schlackenfasern, Metallfasern, Whiskers, Mineralfasern, Wollastonit, Aramidfasern, gemahlenen Glasfasern, gemahlenen Kohlenstofffasern, gemahlenen Mineralfasern und Mischungen hiervon.

Besonders bevorzugt werden die faser- oder nadelförmigen Füllstoffe aus der Gruppe bestehend aus Glasfasern, Kohlenstofffasern, Basaltfasern, Borfasern, Aramidfasern und Mischungen hiervon ausgewählt.

Ganz besonders bevorzugt werden als faser- oder nadelförmige Füllstoffe ausschließlich Glasfasern eingesetzt.

Bei den Glas- oder Kohlenstoffasern können Schnittfasern oder Endlosfasern (Roving) verwendet werden.

Die Glas- oder Kohlenstofffasern weisen einen Querschnitt auf, der kreisförmig (rund), oval, elliptisch, mit Einschnürung(en) elliptisch (sogenannte Kokon- oder cocoon-Fasern), eckig oder rechteckig ist. Fasern mit nicht kreisförmigen Querschnitt, insbesondere ovale, elliptische, mit Einschnürung(en) elliptisch (sogenannte Kokon- oder cocoon-Fasern), eckige oder rechteckige Fasern werden auch als flache Fasern bezeichnet. Es können auch Mischungen von kreisförmigen und nicht kreisförmigen Fasern eingesetzt werden.

Das Erscheinungsbild der Glasfasern kann gestreckt oder spiralförmig sein.

Es können Glasfasern aus allen Glassorten, wie z.B. A-, C-, D-, E-, E-CR-, L-, LD-, M-, NE-, S-, R-, AR-Glas, oder beliebigen Mischungen davon eingesetzt werden. Bevorzugt sind Glasfasern aus E-Glas, S-Glas oder Mischungen mit E- und/oder S-Glasfasern.

Die Schnittglasfasern besitzen eine faserlänge von 1 bis 50 mm, vorzugsweise von 1 bis 25 mm, bevorzugt 1.5 bis 20 mm, besonders bevorzugt 2 bis 12 mm und ganz besonders bevorzugt von 2 bis 8 mm.

Die Glasfasern weisen vorzugsweise einen Durchmesser von 5 bis 20 µm, bevorzugt von 5 bis 15 µm und besonders bevorzugt von 6 bis 12 µm auf.

Werden die Glasfasern als Endlosfasern (Roving) beim Pultrusionsverfahren eingesetzt, weisen sie vorzugsweise einen Durchmesser von maximal 20 µm, bevorzugt von maximal 18 µm, besonders bevorzugt von 10 bis 17 µm auf.

Die Kohlenstofffasern weisen vorzugsweise einen Durchmesser von 3 bis 12 µm, bevorzugt 4 bis 10 µm, besonders bevorzugt 4 bis 9 µm auf.

Bei flachen Fasern beträgt das Aspektverhältnis, d.h. das Verhältnis der Hauptquerschnittsachse zur Nebenquerschnittsachse 1,5 bis 8, bevorzugt 2 bis 6, besonders bevorzugt 2,5 bis 5, ganz besonders bevorzugt 3 bis 4. Unter den flachen Fasern sind flache Glasfasern besonders bevorzugt. Die Querschnittsachsen der flachen Glasfasern sind 3 bis 40 µm lang. Bevorzugt beträgt die Länge der Nebenquerschnittsachse 3 bis 20 µm, besonders bevorzugt 4 bis 10 µm und die Länge der Hauptquerschnittsachse 6 bis 40 µm, besonders bevorzugt 12 bis 30 µm.

Die teilchenförmigen Füllstoffe sind ausgewählt aus der Gruppe bestehend aus Dolomit, Silikaten, Quarz, Talkum, Glimmer, Kaolin, Perlit, Kieselerde, gefällte oder pyrogene Kieselsäuren, Kieselgur, Titandioxid, Magnesiumcarbonat, Magnesiumhydroxid, Aluminiumhydroxyd, gemahlenem oder gefälltem Calciumcarbonat, Zinkoxid, Zinksulfid, Kreide, Kalk, Kalksteinmehl, Schiefermehl, Feldspat, Bariumcarbonat, Bariumsulfat, synthetischen Schichtsilikaten, natürlichen Schichtsilikaten, permanentmagnetischen oder magnetisierbaren Metallen oder Legierungen, Glasflakes, Glaskugeln, Hohlglaskugeln, hohlkugeligen Silikatfüllstoffen und Mischungen hiervon.

Besonders bevorzugt werden die teilchenförmigen Füllstoffe aus der Gruppe bestehend aus Silikaten, Quarz, Talkum, Glimmer, Kaolin, Perlit, Kieselerde, gefällte oder pyrogene Kieselsäuren, Kieselgur, Titandioxid, Magnesiumcarbonat, Magnesiumhydroxid, Aluminiumhydroxyd, gemahlenem oder gefälltem Calciumcarbonat, Kreide, Kalk, Kalksteinmehl, Schiefermehl, Feldspat, Bariumcarbonat, Bariumsulfat, synthetischen Schichtsilikaten, natürlichen Schichtsilikaten, Glasflakes, Glaskugeln, Hohlglaskugeln, hohlkugeligen Silikatfüllstoffen und Mischungen hiervon ausgewählt.

Ganz besonders bevorzugt werden die teilchenförmigen Füllstoffe aus der Gruppe bestehend aus Silikaten, Talkum, Glimmer, Kaolin, Titandioxid, gemahlenem oder gefälltem Calciumcarbonat, Kreide, Kalksteinmehl, Schiefermehl, synthetischen Schichtsilikaten, natürlichen Schichtsilikaten, Glasflakes, Glaskugeln, Hohlglaskugeln und Mischungen hiervon ausgewählt.

Bevorzugt wird in der erfindungsgemäßen Polyamid-Formmasse als Füllstoff (Komponente (B)) mindestens ein faser- und/oder nadelförmigen Füllstoff oder eine Mischung mindestens eines faser- und/oder nadelförmigen Füllstoffs mit mindestens einem teilchenförmigen Füllstoff eingesetzt.

Wird eine Mischung aus mindestens einem faser- und/oder nadelförmigen Füllstoff mit mindestens einem teilchenförmigen Füllstoff verwendet, macht der Anteil des teilchenförmigen Füllstoffs maximal die Hälfte, bevorzugt maximal ein Drittel, besonders bevorzugt maximal ein Viertel der gesamten Menge des Füllstoffs aus.

Besonders bevorzugt wird in der erfindungsgemäßen Polyamid-Formmasse als Füllstoff eine Mischung aus mindestens einem faser- und/oder nadelförmigen Füllstoff mit mindestens einem teilchenförmigen Füllstoff im Gewichtsverhältnis 98:2 bis 100:0 eingesetzt.

Besonders bevorzugt werden in der erfindungsgemäßen Polyamid-Formmasse als Füllstoff eine Mischung aus mindestens einem faserförmigen Füllstoff mit mindestens einem teilchenförmigen Füllstoff im Gewichtsverhältnis 98:2 bis 100:0 eingesetzt.

### Komponente (C)

Gemäß einer bevorzugten Ausführungsform besitzt das mindestens eine substitutierte oder unsubstituierte Metallocen eine Schmelztemperatur von 120 °C bis 350 °C, bevorzugt 140 °C bis 320 °C, besonders bevorzugt 150 bis 280 °C.

Gemäß einer bevorzugten Ausführungsform weist das mindestens eine substitutierte oder unsubstituierte Metallocen als zentrales Metallatom ein Metall der Gruppe 3 bis 12 oder der Lanthanoiden auf, bevorzugt Vanadium, Chrom, Mangan, Eisen, Kobalt, Nickel, Ruthenium, Osmium, Zink, Rhodium, Cadmium, Iridium, Magnesium, Lanthan, Cer, Samarium, Zirkon, Scandium, Yttrium und Kombinationen hiervon, besonders bevorzugt unsubstituierte oder substituierte Bis(η⁵-cyclopentadienyl)eisen, insbesondere ausgewählt aus der Gruppe bestehend aus Ferrocen, 3-Carboxybutyrylferrocen, 3-Carboxypropionylferrocen, 6-Mercaptohexylferrocen, Aminomethylferrocene, Dimethylaminomethylferrocen, Diphenylphosphinoferrocen, 1-Ferrocenacrylonitril, 1-Ferrocenylethanol, 1,1'-Bis(1-Hydroxyethyl)ferrocen, 1,1'-Diacetylferrocen, 1,1'-Diaminoferrocen, 1,1'-Dibenzoylferrocen, 1,1'-Dibutylferrocen, 1,1'-Diethylferrocen, 1,1'-Di-hexylferrocen, 1,1'-Dimethylferrocen, 1,1'-Divinylferrocen, 1,1'-Ferrocen-dicarboxaldehyd, 1,1'-Ferrocendicarboxamid, 1,1'-Ferrocendicarbonsäure, 1,1'-Ferrocendimethanol, 1,1'-Ferrocenylessigsäure, 1,1'-Ferrocenyl-propansäure, 1,1'-Ferrocenylbutansäure, 1,1'-Ferrocenylpentansäure, 1,2,3,4,5-Pentamethylferrocen, 2-Ferrocenylethanol, 3-Ferrocenylpropanol, 3-Ferrocenylpropansäure, 4-Ferrocenylbutansäure, 5-Ferrocenylpentansäure, Acetylferrocen, α-(N,N-Dimethylamino)ethylferrocen, Aminoferrocen, Ethyl-ferrocen, Ferrocenylessigsäure, Ferrocenylmethanol, Octylferrocen, Ferrocencarbonsäure, Ferrocencarboxamid, Ferrocencarboxaldehyd, Propylferrocen, Hexylferrocen, Hydroxyethylferrocen, Benzoylferrocen, Butylferrocen, Methylferrocen, Vinylferrocen und Bis(pentamethylcyclopentadienyl)eisen(II).

Bis(η⁵-cyclopentadienyl)eisen wird auch als Ferrocen bezeichnet (CAS-Nr. 102-54-5). Beide Bezeichnungen werden in dieser Anmeldung synonym verwendet.

Das substituierte Metallocen kann an einem oder beiden Cyclopentadienylringen einfach oder mehrfach substituiert sein. Im Fall, dass beide Cyclopentadienylringe substituiert sind, kann es sich um den gleichen oder verschiedene Substituenten, bevorzugt um den gleichen Substituenten, handeln. Bevorzugt ist jeder Cyclopentadienylring nur einfach substituiert. Besonders bevorzugt ist nur einer der beiden Cyclopentadienylringe substituiert. Insbesondere bevorzugt ist nur einer der beiden Cyclopentadienylringe einfach substituiert.

Die Substituenten sind vorzugsweise ausgewählt aus der Gruppe bestehend aus Alkyl-, Alkylen-, Arylen-Resten, Resten von Carbonsäuren, CarbonsäureDerivaten, Oxoalkansäuren, Alkoholen, Aminen und Resten von Phosphor enthaltenden Substituenten.

Die Substituenten sind bevorzugt ausgewählt aus der Gruppe bestehend aus Alkylresten mit 1 bis 12 C-Atomen, Alkylenresten mit 2 bis 12 C-Atomen, Arylresten mit 6 bis 12 C-Atomen, Resten von Carbonsäuren mit 1 bis 12 C-Atomen, Carbonsäureestern mit 2 bis 20 C-Atomen, Carbonsäureanhydriden mit 2 bis 12 C-Atomen, Oxoalkansäuren mit 1 bis 12 C-Atomen, Alkoholen mit 1 bis 12 C-Atomen, Aminen mit 0 bis 12 C-Atomen und Resten von Phosphor enthaltenden Substituenten.

Besonders bevorzugt sind die Substituenten ausgewählt aus der Gruppe bestehend aus Alkylresten mit 1 bis 9 C-Atomen, Alkylenresten mit 2 bis 9 C-Atomen, Arylresten mit 6 bis 9 C-Atomen, Resten von Carbonsäuren mit 1 bis 9 C-Atomen, Carbonsäureestern mit 2 bis 18 C-Atomen, Carbonsäureanhydriden mit 2 bis 9 C-Atomen, Oxoalkansäuren mit 1 bis 9 C-Atomen, Alkoholen mit 1 bis 9 C-Atomen, Aminen mit 0 bis 9 C-Atomen und Resten von Phosphor enthaltenden Substituenten.

Ganz besonders bevorzugt sind die Substituenten ausgewählt aus der Gruppe bestehend aus Alkylresten mit 1 bis 6 C-Atomen, Alkylenresten mit 2 bis 6 C-Atomen, Arylresten mit 6 bis 7 C-Atomen, Resten von Carbonsäuren mit 1 bis 6 C-Atomen, Carbonsäureestern mit 2 bis 14 C-Atomen, Carbonsäureanhydriden mit 2 bis 6 C-Atomen, Oxoalkansäuren mit 1 bis 6 C-Atomen, Alkoholen mit 1 bis 6 C-Atomen, Aminen mit 0 bis 6 C-Atomen und Resten von Phosphor enthaltenden Substituenten.

Gemäß einer bevorzugten Ausführungsform der vorliegenden Erfindung ist das mindestens eine unsubstituierte oder substituierte Metallocen Bis(η⁵-cyclopenta-dienyl)eisen ausgewählt aus der Gruppe bestehend aus Ferrocen, 3-Carboxy-butyrylferrocen, 3-Carboxypropionylferrocen, 6-Mercaptohexylferrocen, Aminomethylferrocene, Dimethylaminomethylferrocen, Diphenylphosphino-ferrocen, 1-Ferrocenacrylonitril, 1-Ferrocenylethanol, 1,1'-Bis(1-Hydroxy-ethyl)ferrocen, 1,1'-Diacetylferrocen, 1,1'-Diamino-ferrocen, 1,1'-Dibenzoylferrocen, 1,1'-Dibutylferrocen, 1,1'-Diethylferrocen, 1,1'-Dihexylferrocen, 1,1'-Dimethylferrocen, 1,1'-Divinylferrocen, 1,1'-Ferrocendicarboxaldehyd, 1,1'-Ferrocendicarboxamid, 1,1'-Ferrocendicarbonsäure, 1,1'-Ferrocen-dimethanol, 1,1'-Ferrocenylessigsäure, 1,1'-Ferrocenylpropansäure, 1,1'-Ferrocenylbutansäure, 1,1'-Ferrocenylpentansäure, 1,2,3,4,5-Penta-methylferrocen, 2-Ferrocenylethanol, 3-Ferrocenylpropanol, 3-Ferrocenyl-propansäure, 4-Ferrocenylbutansäure, 5-Ferrocenylpentansäure, Acetyl-ferrocen, α-(N,N-Di-methylamino)ethyl-ferrocen, Aminoferrocen, Ethyl-ferrocen, Ferrocenylessigsäure, Ferrocenylmethanol, Octylferrocen, Ferrocencarbonsäure, Ferrocencarboxamid, Ferrocencarboxaldehyd, Propylferrocen, Hexylferrocen, Hydroxyethylferrocen, Benzoylferrocen, Butylferrocen, Methylferrocen, Vinylferrocen und Bis(pentamethylcyclopentadienyl)eisen(II).

Gemäß einer besonders bevorzugten Ausführungsform der vorliegenden Erfindung ist das mindestens eine unsubstituierte oder substituierte Metallocen Bis(η⁵-cyclopenta-dienyl)eisen ausgewählt aus der Gruppe bestehend aus Ferrocen, Aminoferrocen,
1,1'-Diaminoferrocen, Ferrocencarbonsäure, 1,1'-Ferrocendicarbonsäure, Aminomethylferrocen, 1,1'-Bis(aminomethyl)ferrocen, Dimethylaminomethylferrocen, 1,1'-Bis(dimethylaminomethyl)ferrocen, Ferrocenylessigsäure, 1,1'-Ferrocenylessigsäure, Ferrocenylmethanol, 1,1'-Ferrocendimethanol, Ferrocencarboxaldehyd, 1,1'-Ferrocendicarboxal-dehyd, Acetylferrocen, 1,1'-Diacetylferrocen, Methylferrocen und 1,1'-Di-methylferrocen.

Gemäß einer weiteren besonders bevorzugten Ausführungsform der vorliegenden Erfindung ist das mindestens eine unsubstituierte oder substituierte Metallocen Bis(η⁵-cyclopenta-dienyl)eisen ausgewählt aus der Gruppe bestehend aus Ferrocen, Amino-ferrocen,1,1'-Diaminoferrocen, Ferrocencarbonsäure, 1,1'-Ferrocendicarbon-säure, Aminomethylferrocen, 1,1'-Bis(aminomethyl)-ferrocen, Ferrocenyl-essigsäure und 1,1'-Ferrocenylessigsäure.

Gemäß einer ganz besonders bevorzugten Ausführungsform der vorliegenden Erfindung ist das mindestens eine unsubstituierte oder substituierte Metallocen Bis(η⁵-cyclopenta-dienyl)eisen Ferrocen.

### Komponente (D)

Der mindestens eine Zusatzstoff (Komponente (D)) ist ausgewählt aus der Gruppe bestehend aus sich von der Komponente (C) unterscheidenden anorganischen Stabilisatoren, organischen Stabilisatoren, insbesondere Antioxidantien, Antiozonantien, Lichtschutzmitteln, UV-Stabilisatoren, UV-Absorbern oder UV-Blockern, IR-Absorbern, NIR-Absorbern, Antiblockmitteln, Nukleierungsmitteln, Kristallisationsbeschleunigern, Kristallisationsverzögerern, kettenverlängernden Additiven, Leitfähigkeitsadditiven, Trennmitteln, Gleitmitteln, Farbstoffen, Markierungsmitteln, anorganischen Pigmenten, organischen Pigmenten, Ruß, Graphit, Kohlenstoffnanoröhrchen, Graphen, photochromen Agenzien, Antistatika, Entformungsmitteln, optischen Aufhellern, halogenfreien Flammschutzmitteln, metallischen Pigmenten, Metallflittern, metallbeschichteten Partikeln und deren Mischungen.

In einer besonders bevorzugten Ausführungsform der vorliegenden Erfindung ist der mindestens eine Zusatzstoff (Komponente (D)) ausgewählt aus der Gruppe bestehend aus organischen Stabilisatoren, insbesondere Antioxidantien, Antiozonantien, Lichtschutzmitteln, UV-Stabilisatoren, UV-Absorbern oder UV-Blockern, IR-Absorbern, NIR-Absorbern, Antiblockmitteln, Nukleierungsmitteln, Kristallisationsbeschleunigern, Kristallisationsverzögerern, kettenverlängernden Additiven, Leitfähigkeitsadditiven, Trennmitteln, Gleitmitteln, Farbstoffen, Markierungsmitteln, anorganischen Pigmenten, organischen Pigmenten, Ruß, Graphit, Kohlenstoffnanoröhrchen, Graphen, photochromen Agenzien, Antistatika, Entformungsmitteln, optischen Aufhellern, halogenfreien Flammschutzmitteln, metallischen Pigmenten, Metallflittern, metallbeschichteten Partikeln und deren Mischungen.

Bei den organischen Stabilisatoren sind Phenol-, Phosphit-, Phosphonit-Verbindungen, Stabilisatoren auf Basis eines gehinderten Amins (HALS) oder deren Mischungen besonders bevorzugt.

Der mindestens eine Zusatzstoff kann auch in Masterbatchform zugegeben werden. Bevorzugt wird als Basispolymer des Masterbatches ein Polyamid oder Polyolefin verwendet. Das Polyamid ist vorzugsweise ausgewählt aus der Gruppe bestehend aus den PA 6, PA 66, PA 6/12, PA 6/66, PA 6/69, PA 12, PA 1012, PA 1212 und deren Mischungen oder besteht aus dem Polyamid (A1) oder (A2) oder der Polyamidmischung (A).

### Formkörper

Erfindungsgemäß werden ebenso Formkörper bereitgestellt, die aus den zuvor beschriebenen Formmassen herstellbar sind oder diese enthalten. Die erfindungsgemäßen Formkörper können aus der erfindungsgemäßen Polyamid-Formmasse über die gängigen Verarbeitungstechniken, wie Spritzguss, Extrusion oder Blasformen, insbesondere durch Spritzguss hergestellt werden. Es handelt sich dabei bevorzugt um Formkörper aus den Bereichen Automobil, insbesondere im Motorraum, Elektro, Elektronik, Maschinenbau, Energieerzeugung und Energieversorgung.

Eine bevorzugte Ausführungsform sieht vor, dass der Formkörper ausgewählt ist aus der Gruppe bestehend aus Zylinderkopfhauben, Motorabdeckungen, Gehäusen und Teilen für Ladeluftkühler, Ladeluftkühlerklappen, Ansaugrohren, insbesondere Ansaugkrümmern, Abgasleitungen, Konnektoren, Zahnräder, Lüfterräder, Kühlwasserkästen, Gehäusen oder Teilen von Wärmetauschern, Kühlmittelkühler, Thermostaten, Wasserpumpen, Heizkörpern, Befestigungsteilen, Leiterplatten, Folien, Leitungen, Gehäusen und Teilen von Elektro/Elektronikgeräten, Gehäusen und Teilen von Heizlüftern, Schaltern, Verteilern, Relais, Widerständen, Kondensatoren, Spulen, Lampen, Dioden, LEDs, Transistoren, Konnektoren, Reglern, Speichern und Sensoren.

### Verwendungen

Weiterhin betrifft die vorliegende Erfindung die Verwendung der oben definierten erfindungsgemäßen Polyamid-Formmasse zur Herstellung von Formkörpern, bevorzugt von Teilen oder Bauteilen für die Bereiche Automobil, insbesondere im Motorraum, Elektro, Elektronik, Maschinenbau, Energieerzeugung, Energieversorgung, wie Zylinderkopfhauben, Motorabdeckungen, Gehäusen und Teilen für Ladeluftkühler, Ladeluftkühlerklappen, Ansaugrohren, insbesondere Ansaugkrümmern, Abgasleitungen, Konnektoren, Zahnräder, Lüfterräder, Kühlwasserkästen, Gehäusen oder Teilen von Wärmetauschern, Kühlmittelkühler, Thermostaten, Wasserpumpen, Heizkörpern, Befestigungsteilen, Leiterplatten, Folien, Leitungen, Gehäusen und Teilen von Elektro/Elektronikgeräten, Gehäusen und Teilen von Heizlüftern, Schaltern, Verteilern, Relais, Widerständen, Kondensatoren, Spulen, Lampen, Dioden, LEDs, Transistoren, Konnektoren, Reglern, Speichern und Sensoren.

### Messmethoden, Lagerungsbedingungen und Herstellung der Prüfkörper

### Relative Viskosität:

Die relative Viskosität wurde gemäß ISO 307 (2007) bei 20 °C bestimmt. Dazu wurden 0,5 g Polymergranulat in 100 ml m-Kresol eingewogen, die Berechnung der relativen Viskosität (RV) nach RV = t/t₀ erfolgte in Anlehnung an Abschnitt 11 der Norm.

### Schmelzpunkt und Schmelzwärme:

Die Bestimmung erfolgte nach ISO 11357-3 (2013) an Granulat.

Die Differential Scanning Calorimetry (DSC) wurde bei jeder der beiden Aufheizungen mit einer Aufheizrate von 20 K/min durchgeführt. Nach der ersten Aufheizung wird mit 20 K/min abgekühlt. Der Schmelzpunkt und die Schmelzwärme werden bei der zweiten Aufheizung bestimmt. Beim Schmelzpunkt wird die Temperatur am Peakmaximum angegeben.

### Reissfestigkeit und Reissdehnung:

Die Bestimmung erfolgte nach ISO 527 mit einer Zuggeschwindigkeit von 5 mm/min bei einer Temperatur von 23 °C. Als Prüfkörper wurden bei erhöhter Temperatur gelagerte und anschließend abgekühlte ISO-Zugstäbe (Typ A1, Masse 170 x 20/10 x 4) verwendet, hergestellt gemäß der Norm: ISO/CD 3167 (2003). Zur Abkühlung wurden die ISO-Zugstäbe vor der Zugprüfung mindestens 48 h bei Raumtemperatur in trockener Umgebung, d.h. über Silicagel, aufbewahrt.

### Lagerungsbedingungen:

Die Lagerung erfolgte in einem Trockenschrank bei 180 °C, 200 °C und 220 °C. Die Probenentnahme fand bei allen Lagerungen zu den gleichen Zeitpunkten statt, und zwar jeweils nach 504 h, 1008 h, 1512 h und 2016 h. Pro Material, Lagerungszeit und Lagerungstemperatur wurden jeweils 5 ISO-Zugstäbe (Typ A1, Masse 170 x 20/10 x 4, hergestellt gemäß der Norm: ISO/CD 3167 (2003)) gelagert und das arithmetische Mittel der 5 Messwerte gebildet.

### Spiralfließtest:

Auf einer Spritzgussmaschine der Firma Arburg, Model Allrounder 420 C 100-250 werden die Fließspiralen bei einer Massetemperatur von 330 °C und einer Werkzeugtemperatur von 80 °C mit einem Einspritzdruck von 1000 bar hergestellt.

Die Fließspirale hat ihren Stangenanguss im Zentrum und einen Querschnitt von 1.5 x 10 mm. In der Spirale sind folgende Entfernungsmarken angebracht:
- Punkte im Abstand von 1 mm
- Striche bei vollen Zentimetern
- Längenangaben alle 5 cm

### Herstellung der Prüfkörper:

Zur Herstellung der ISO-Zugstäbe wurde Granulat mit einem Wassergehalt von weniger als 0,1 Gew.-% verwendet.

Die ISO-Zugstäbe wurden auf einer Spritzgussmaschine der Firma Arburg, Modell Allrounder 420 C 1000-250 gefertigt. Dabei wurden vom Einzug zur Düse auf- und absteigende Zylindertemperaturen verwendet.

| | |
|---|---|
| Zylindertemperaturen: | 310 bis 340 °C |
| Werkzeugtemperatur: | 120°C |

Die Prüfkörper wurden, sofern nichts anderes angegeben ist, in trockenem Zustand verwendet; dazu wurden sie nach dem Spritzguss mindestens 48 h bei Raumtemperatur in trockener Umgebung, d.h. über Silicagel, aufbewahrt.

### Allgemeine Herstellungsvorschrift für die erfindungsgemäßen Polyamid-Formmassen

Zur Herstellung der erfindungsgemäßen Polyamid-Formmasse werden die Komponenten (A1), (B), (C) und gegebenenfalls (A2) und gegebenenfalls (D) auf üblichen Compoundiermaschinen, wie z.B. ein- oder zweiwelligen Extrudern oder Schneckenknetern gemischt. Die Komponenten werden dabei einzelnen über gravimetrische oder volumetrische Dosierwaagen in den Einzug oder jeweils in einen Sidefeeder dosiert oder in Form eines Dryblends zugeführt.

Werden Zusatzstoffe (Komponente (D)) verwendet, können diese direkt oder in Form eines Masterbatches eingebracht werden. Bei dem Trägermaterial des Masterbatches handelt es sich bevorzugt um ein Polyamid oder ein Polyolefin. Das Polyamid ist vorzugsweise ausgewählt aus der Gruppe bestehend aus den PA 6, PA 66, PA 6/12, PA 6/66, PA 6/69, PA 12, PA 1012, PA 1212 und deren Mischungen oder besteht aus dem Polyamid (A1) oder (A2) oder der Polyamidmischung (A).

Zur Dryblend-Herstellung werden das getrockneten Granulat des Polyamids (A1), die Komponente (C) und gegebenenfalls das getrocknete Granulat des Polyamids (A2) und gegebenenfalls die Zusatzstoffe (D) in einem geschlossenen Behälter vermischt. Diese Mischung wird mittels eines Taumelmischers, Rhönradmischers oder Taumeltrockners 10 bis 40 Minuten lang homogenisiert. Zur Vermeidung der Feuchtigkeitsaufnahme kann dies unter getrocknetem Schutzgas erfolgen.

Die Compoundierung erfolgt bei eingestellten Zylindertemperaturen von 300 bis 380 °C, wobei die Temperatur des ersten Zylinders auf 50 bis 100 °C eingestellt werden kann. Vor der Düse kann entgast werden. Dies kann mittels Vakuum oder atmosphärisch erfolgen. Die Schmelze wird in Strangform ausgetragen, im Wasserbad bei 10 bis 80 °C abgekühlt und anschließend granuliert. Alternativ kann die Schmelze auch durch eine Lochplatte mit Schneideinrichtung in ein Wasserbad gepresst und die abgeschnittenen Granulate in eine Nachbehandlungsstrecke abgetrennt werden (Unterwassergranulation). Das Granulat wird bei maximal 100 °C unter Stickstoff oder im Vakuum auf einen Wassergehalt von unter 0,1 Gew.-% getrocknet.

Anhand der nachfolgenden Beispiele soll der erfindungsgemäße Gegenstand näher erläutert werden, ohne diesen auf die hier gezeigten spezifischen Ausführungsformen einschränken zu wollen.

### Beispiele und Vergleichsbeispiele

### Ausgangsmaterialien

Die in den Beispielen und Vergleichsbeispielen verwendeten Materialien werden in der Tabelle 1 zusammengefasst.

**Tabelle 1: In den Beispielen und Vergleichsbeispielen verwendete Materialien**

| **Komponenten** | **Beschreibung** | **Hersteller** |
|---|---|---|
| Polyamid 6T/66 (A1.1) | Teilkristallines Polyamid aus 1,6-Hexandiamin (50 Mol-%), Terephthalsäure (27,5 Mol-%) und Adipinsäure (22,5 Mol-%) | EMS-CHEMIE AG, Schweiz |
| | RV 1,69 (gemessen mit 0,5 g in 100 ml m-Kresol bei 20 °C) | |
| | Schmelztemperatur 310 °C | |
| | Schmelzwärme 60 J/g | |
| Polyamid 6T/6I (A1.2) | Teilkristallines Polyamid aus 1,6-Hexandiamin (50 Mol-%), Terephthalsäure (35 Mol-%) und Isophthalsäure (15 Mol-%) | EMS-CHEMIE AG, Schweiz |
| | RV 1,58 (gemessen mit 0,5 g in 100 ml m-Kresol bei 20 °C) | |
| | Schmelztemperatur 325 °C | |
| | Schmelzwärme 45 J/g | |
| Polyamid 6 (A2) | Polyamid 6 aus ε-Caprolactam | EMS-CHEMIE AG, Schweiz |
| | RV 1,80 (gemessen mit 0,5 g in 100 ml m-Kresol bei 20 °C) | |
| | Schmelztemperatur 222 °C | |
| Glasfaser (B1) | runde Glasfaser, 4.5 mm lang | Owens Corning Vetrotex, Frankreich |
| | Durchmesser 10 µm | |
| | Handelsname: OCV 995 EC10-4.5 | |
| Kaolin (B2) | CAS-Nr. 1332-58-7 | BASF SE, Deutschland |
| | Handelsname: Translink 445 | |
| Ferrocen (C) | Bis(η5-cyclopentadienyl)eisen, CAS-Nr. 102-54-5 | Innospec Deutschland GmbH, Deutschland |
| | Handelsname: Plutocen F-C | |
| Schwarz-Masterbatch (D1) | 25 Gew.-% Russ in Radipol A45 (PA66) | RadiciChimica SpA, Italien |
| KJ : Ca-stearat | Mischung aus Kaliumjodid (CAS-Nr. 7681-11-0) und Calciumstearat (CAS-Nr. 1592-23-0) | Liquichem Handelsge-sellschaft mbH, Deutschland |
| 98 : 2 Gew.-% (D2) | | |
| | im Gewichtsverhältnis 98:2 | |
| | Handelsname: Adnol TS P stab | |
| CuJ (D3) | Kupferjodid, CAS-Nr. 7681-65-4 | Liquichem Handelsge-sellschaft mbH, Deutschland |

| | | |
|---|---|---|
| RV relative Viskosität, gemessen an einer Lösung aus 0,5 g Polyamid in 100 ml m-Kresol bei 20 °C | | |

### Herstellung der Polyamid-Formmasse gemäß Beispiel 2

Die getrockneten Granulate des Polyamids (A1.1) und (A2), der Füllstoff (B2), das Ferrocen (C) und der Zusatzstoff (D1) wurden zu einem Dryblend vermischt, und zwar in dem in der Tabelle 2 angegebenen Verhältnis. Diese Mischung wurde mittels eines Taumelmischers ca. 20 Minuten lang homogenisiert.

Die Polyamid-Formmasse wurde auf einem Zweiwellenextruder der Firma Werner & Pfleiderer Typ ZSK 25 hergestellt. Das Dryblend wurde dabei über eine Dosierwaage in den Einzug dosiert. Die Glasfasern (B1) wurden mittels einer Dosierwaage und eines Sidefeeders 6 Gehäusezonen vor der Düse in die Schmelze gefördert.

Die Temperatur des ersten Gehäuses wurde auf 50 °C eingestellt, diejenige der restlichen Gehäuse auf 305 bis 330 °C. Es wurde eine Drehzahl von 150 U/min und ein Durchsatz von 15 kg/h verwendet. Es wurde nicht entgast. Der Schmelzestrang wurde im Wasserbad abgekühlt, geschnitten und das erhaltene Granulat bei 100 °C für 24 h im Vakuum (30 mbar) auf einen Wassergehalt von unter 0,1 Gew.-% getrocknet.

In den folgenden Tabellen 2 bis 4 werden die Resultate der Beispiele und Vergleichsbeispiele gemäß vorliegender Erfindung zusammengefasst.

**Tabelle 2: Versuche mit PA 6, Reissfestigkeit in MPa und in % des Ausgangswertes**

| **Komponente** | **Einheit** | **Beispiele** | | | | **Vergleichsbeispiel** | | **Beispiel** | | **Vergleichsbeispiel** | |
|---|---|---|---|---|---|---|---|---|---|---|---|
| | | **1** | | **2** | | **3** | | **4** | | **5** | |
| **PA 6T/66 (A1.1)** | Gew.-% | 49.94 | | 50.7 | | 50.6 | | 37.3 | | 37.3 | |
| **PA 6 (A2)** | Gew.-% | 16.8 | | 16.8 | | 16.8 | | 15.24 | | 15.25 | |
| **Kaolin (B2)** | Gew.-% | 0.26 | | 0.26 | | 0.26 | | 0.22 | | 0.22 | |
| **KJ : Ca-stearat** | Gew.-% | - | | - | | 0.3 | | - | | 0.2 | |
| **98 : 2 Gew.-% (D2)** | | | | | | | | | | | |
| **CuJ (D3)** | Gew.-% | - | | - | | 0.04 | | - | | 0.03 | |
| **Ferrocen (C)** | Gew.-% | 1.0 | | 0.24 | | - | | 0.24 | | - | |
| **Schwarz-Masterbatch (D1)** | Gew.-% | 2.0 | | 2.0 | | 2.0 | | 2.0 | | 2.0 | |
| **Glasfaser (B1)** | Gew.-% | 30 | | 30 | | 30 | | 45 | | 45 | |

| **Lagerungsdauer** | | **Reissfestigkeit** | | | | | | | | | |
|---|---|---|---|---|---|---|---|---|---|---|---|
| | - | MPa | % | MPa | % | MPa | % | MPa | % | MPa | % |
| **0** | h | 189 | 100 | 206 | 100 | 197 | 100 | 240 | 100 | 238 | 100 |

| | | **Lagerungstemperatur 180 °C** | | | | | | | | | |
|---|---|---|---|---|---|---|---|---|---|---|---|
| **504** | h | 205 | 108 | 219 | 106 | 179 | 91 | 256 | 107 | 232 | 98 |
| **1008** | h | 205 | 108 | 205 | 100 | 159 | 81 | 244 | 102 | 204 | 86 |
| **1512** | h | 200 | 106 | 201 | 98 | 148 | 75 | 241 | 100 | 195 | 82 |
| **2016** | h | 193 | 102 | 200 | 97 | 147 | 75 | 254 | 106 | 192 | 81 |

| | | **Lagerungstemperatur 200 °C** | | | | | | | | | |
|---|---|---|---|---|---|---|---|---|---|---|---|
| **504** | h | 198 | 105 | - | - | 160 | 81 | - | - | - | - |
| **1008** | h | 197 | 104 | - | - | 164 | 83 | - | - | - | - |
| **1512** | h | 194 | 103 | - | - | 158 | 80 | - | - | - | - |
| **2016** | h | 189 | 100 | - | - | 159 | 81 | - | - | - | - |

| | | **Lagerungstemperatur 220 °C** | | | | | | | | | |
|---|---|---|---|---|---|---|---|---|---|---|---|
| **504** | h | 197 | 104 | 204 | 99 | 174 | 88 | 251 | 105 | 231 | 97 |
| **1008** | h | 201 | 106 | 193 | 94 | 179 | 91 | 231 | 96 | 222 | 93 |
| **1512** | h | 206 | 109 | 197 | 97 | 173 | 88 | 242 | 101 | 182 | 76 |
| **2016** | h | 195 | 103 | 206 | 100 | 163 | 83 | 248 | 103 | 95 | 40 |

**Tabelle 3: Versuche mit PA 6, Reissdehnung in %**

| **Komponente** | **Einheit** | **Beispiele** | | **Vergleichsbeispiel** | **Beispiel** | **Vergleichsbeispiel** |
|---|---|---|---|---|---|---|
| | | **1** | **2** | **3** | **4** | **5** |
| **PA 6T/66 (A1.1)** | Gew.-% | 49.94 | 50.7 | 50.6 | 37.3 | 37.3 |
| **PA 6 (A2)** | Gew.-% | 16.8 | 16.8 | 16.8 | 15.24 | 15.25 |
| **Kaolin (B2)** | Gew.-% | 0.26 | 0.26 | 0.26 | 0.22 | 0.22 |
| **KJ : Ca-stearat** | Gew.-% | - | - | 0.3 | - | 0.2 |
| **98 : 2 Gew.-% (D2)** | | | | | | |
| **CuJ (D3)** | Gew.-% | - | - | 0.04 | - | 0.03 |
| **Ferrocen (C)** | Gew.-% | 1.0 | 0.24 | - | 0.24 | - |
| **Schwarz-Masterbatch (D1)** | Gew.-% | 2.0 | 2.0 | 2.0 | 2.0 | 2.0 |
| **Glasfaser (B1)** | Gew.-% | 30 | 30 | 30 | 45 | 45 |

| **Lagerungsdauer** | - | **Reissdehnung** | | | | |
|---|---|---|---|---|---|---|
| | | % | % | % | % | % |
| **0** | h | 2.5 | 2.7 | 2.5 | 2.5 | 2.4 |

| | | **Lagerungstemperatur 180 °C** | | | | |
|---|---|---|---|---|---|---|
| **504** | h | 2.8 | 3.0 | 2.0 | 2.7 | 2.1 |
| **1008** | h | 2.8 | 2.6 | 1.7 | 2.4 | 1.6 |
| **1512** | h | 2.7 | 2.5 | 1.5 | 2.4 | 1.5 |
| **2016** | h | 2.5 | 2.5 | 1.5 | 2.6 | 1.5 |

| | | **Lagerungstemperatur 200 °C** | | | | |
|---|---|---|---|---|---|---|
| **504** | h | 2.5 | - | 1.7 | - | - |
| **1008** | h | 2.6 | - | 1.7 | - | - |
| **1512** | h | 2.6 | - | 1.7 | - | - |
| **2016** | h | 2.4 | - | 1.7 | - | - |

| | | **Lagerungstemperatur 220 °C** | | | | |
|---|---|---|---|---|---|---|
| **504** | h | 2.5 | 2.6 | 1.9 | 2.8 | 2.0 |
| **1008** | h | 2.7 | 2.2 | 2.0 | 1.9 | 1.9 |
| **1512** | h | 2.8 | 2.3 | 1.9 | 2.2 | 1.4 |
| **2016** | h | 2.4 | 2.5 | 1.8 | 2.3 | 0.7 |

**Tabelle 4: Versuche ohne PA 6, Reissfestigkeit in MPa und in % des Ausgangswertes**

| **Komponente** | **Einheit** | **Beispiel** | | **Vergleichsbeispiel** | | **Beispiel** | | **Vergleichsbeispiel** | |
|---|---|---|---|---|---|---|---|---|---|
| | | **6** | | **7** | | **8** | | **9** | |
| **PA 6T/66 (A1.1)** | Gew.-% | 69 | | 69.4 | | - | | - | |
| **PA 6T/6I (A1.2)** | Gew.-% | - | | - | | 51.0 | | 51.4 | |
| **Tafmer MC 5020C (D4)** | Gew.-% | - | | - | | 18.0 | | 18.0 | |
| **KJ : Ca-stearat** | Gew.-% | - | | 0.5 | | - | | 0.5 | |
| **98 : 2 Gew.-% (D2)** | | | | | | | | | |
| **CuJ (D3)** | Gew.-% | - | | 0.1 | | - | | 0.1 | |
| **Ferrocen (C)** | Gew.-% | 1.0 | | - | | 1.0 | | - | |
| **Glasfaser (B1)** | Gew.-% | 30 | | 30 | | 30 | | 30 | |

| **Lagerungsdauer** | | **Reissfestigkeit** | | | | | | | |
|---|---|---|---|---|---|---|---|---|---|
| | - | MPa | % | MPa | % | MPa | % | MPa | % |
| **0** | h | 194 | 100 | 200 | 100 | 209 | 100 | 200 | 100 |

| | | **Lagerungstemperatur 180 °C** | | | | | | | |
|---|---|---|---|---|---|---|---|---|---|
| **504** | h | 194 | 100 | 177 | 89 | 99 | 108 | 92 | 88 |
| **1008** | h | 186 | 96 | 175 | 88 | 91 | 99 | 82 | 78 |

| | | **Lagerungstemperatur 200 °C** | | | | | | | |
|---|---|---|---|---|---|---|---|---|---|
| **504** | h | 198 | 202 | 160 | 80 | 88 | 96 | 72 | 69 |
| **1008** | h | 185 | 95 | 144 | 72 | 81 | 88 | 66 | 63 |

| | | **Lagerungstemperatur 220 °C** | | | | | | | |
|---|---|---|---|---|---|---|---|---|---|
| **504** | h | 183 | 94 | 142 | 71 | 73 | 79 | 64 | 61 |
| **1008** | h | 153 | 79 | 105 | 53 | 61 | 66 | 57 | 54 |

**Tabelle 5: Versuche ohne PA 6, Reissdehnung in %**

| **Komponente** | **Einheit** | **Beispiel** | **Vergleichsbeispiel** | **Beispiel** | **Vergleichsbeispiel** |
|---|---|---|---|---|---|
| | | **6** | **7** | **8** | **9** |
| **PA 6T/66 (A1.1)** | Gew.-% | 69 | 69.4 | - | - |
| **PA 6T/61 (A1.2)** | Gew.-% | - | - | 51.0 | 51.4 |
| **Tafmer MC201** | Gew.-% | - | - | 18.0 | 18.0 |
| **KJ : Ca-stearat** | Gew.-% | - | 0.5 | - | 0.5 |
| **98 : 2 Gew.-% (D2)** | | | | | |
| **CuJ (D3)** | Gew.-% | - | 0.1 | - | 0.1 |
| **Ferrocen (C)** | Gew.-% | 1.0 | - | 1.0 | - |
| **Glasfaser (B1)** | Gew.-% | 30 | 30 | 30 | 30 |

| **Lagerungsdauer in [h]** | - | **Reissdehnung** | | | |
|---|---|---|---|---|---|
| | | % | % | % | % |
| **0** | h | 2.5 | 2.5 | 2.1 | 2.1 |

| | | **Lagerungstemperatur 180 °C** | | | |
|---|---|---|---|---|---|
| **504** | h | 2.5 | 2.0 | 1.8 | 1.2 |
| **1008** | h | 2.3 | 2 | 1.4 | 1.1 |

| | | **Lagerungstemperatur 200 °C** | | | |
|---|---|---|---|---|---|
| **504** | h | 2.5 | 1.7 | 1.3 | 0.9 |
| **1008** | h | 2.3 | 1.5 | 1.1 | 0.8 |

| | | **Lagerungstemperatur 220 °C** | | | |
|---|---|---|---|---|---|
| **504** | h | 2.2 | 1.4 | 1.0 | 0.8 |
| **1008** | h | 1.7 | 1.1 | 0.8 | 0.6 |

Die Tabelle 6 gibt die Ergebnisse des Spiralfließtests an den Polyamid-Formmassen des Beispiels 1 und des Vergleichsbeispiels 3 wieder.

**Tabelle 6: Spiralfließtest zur Bestimmung der Fließlänge (Fließfähigkeit) an den Polyamid-Formmassen des Beispiels 1 und des Vergleichsbeispiels 3**

| | **Einheit** | **Beispiele** | **Vergleichsbeispiel** |
|---|---|---|---|
| | | **1** | **3** |
| **PA 6T/66 (A1.1)** | Gew.-% | 49.94 | 50.6 |
| **PA 6 (A2)** | Gew.-% | 16.8 | 16.8 |
| **Kaolin (B2)** | Gew.-% | 0.26 | 0.26 |
| **KJ : Ca-stearat** | Gew.-% | - | 0.3 |
| **98 : 2 Gew.-% (D2)** | | | |
| **CuJ (D3)** | Gew.-% | - | 0.04 |
| **Ferrocen (C)** | Gew.-% | 1.0 | - |
| **Schwarz-Masterbatch (D1)** | Gew.-% | 2.0 | 2.0 |
| **Glasfaser (B1)** | Gew.-% | 30 | 30 |

| | | Fließlänge | |
|---|---|---|---|
| **Spiralfließtest** | mm | 471 | 385 |

### Diskussion der Ergebnisse

Die Ergebnisse der Tabellen 2 und 3 zeigen, dass die Polyamid 6-haltigen Polyamid-Formmassen der erfindungsgemäßen Beispiele 1, 2 und 4, die Ferrocen (C) als Stabilisator enthalten, gegenüber den Polyamid 6-haltigen Polyamid-Formmassen der Vergleichsbeispiele 3 und 4, die eine anorganische Stabilisierung aus den Komponenten (D2) und (D3) enthalten, nach Lagerung der aus den Polyamid-Formmassen hergestellten Prüfkörper sowohl einen verbesserten Erhalt der Reissfestigkeit als auch der Reissdehnung aufweisen, und zwar bei allen drei Lagerungstemperaturen (180 °C, 200 °C und 220 °C) und einer Lagerungsdauer von 504 bis 2016 Stunden.

Die Ergebnisse der Tabellen 3 und 4 zeigen, dass die Polyamid 6-freien Polyamid-Formmassen der erfindungsgemäßen Beispiele 6 und 8, die Ferrocen (C) als Stabilisator enthalten, gegenüber den Polyamid 6-freien Polyamid-Formmassen der Vergleichsbeispiele 7 und 9, die eine anorganische Stabilisierung aus den Komponenten (D2) und (D3) enthalten, nach Lagerung der aus den Polyamid-Formmassen hergestellten Prüfkörper ebenfalls sowohl einen verbesserten Erhalt der Reissfestigkeit als auch der Reissdehnung aufweisen, und zwar bei allen drei Lagerungstemperaturen (180 °C, 200 °C und 220 °C) und einer Lagerungsdauer von 504 bis 1008 Stunden.

Die Ergebnisse der Tabelle 6 belegen, dass die Polyamid-Formmasse des erfindungsgemäßen Beispiels 1, die Ferrocen (C) als Stabilisator enthält, eine deutlich verbesserte Fließfähigkeit gegenüber der Polyamid-Formmasse des Vergleichsbeispiels 3 besitzt, die eine anorganische Stabilisierung aus den Komponenten (D2) und (D3) enthält.

## Patentansprüche

1. Polyamid-Formmasse enthaltend oder bestehend aus:
(A) 27 bis 89,99 Gew.-% mindestens eines teilkristallinen, teilaromatischen Polyamids (A1) oder einer Polyamidmischung bestehend aus
(A1) mindestens einem teilkristallinen, teilaromatischen Polyamid und
(A2) mindestens einem caprolactamhaltigen Polyamid mit einem Gehalt an Caprolactam von wenigstens 50 Gew.-%, verschieden vom teilkristallinen, teilaromatischen Polyamid (A1),
wobei der Caprolactamgehalt, bezogen auf die Polyamidmischung, 5 bis 38 Gew.-% beträgt,
(B) 10 bis 65 Gew.-% mindestens eines Füllstoffes ausgewählt aus der Gruppe bestehend aus
• faser- oder nadelförmige Füllstoffe, bevorzugt ausgewählt aus der Gruppe bestehend aus Glasfasern, Kohlenstofffasern, Basaltfasern, Borfasern, Schlackenfasern, Metallfasern, Whiskers, Mineralfasern, Wollastonit, Aramidfasern, gemahlenen Glasfasern, gemahlenen Kohlenstofffasern, gemahlenen Mineralfasern und Mischungen hiervon, besonders bevorzugt ausgewählt aus der Gruppe bestehend aus Glasfasern, Kohlenstofffasern, Basaltfasern, Borfasern, Aramidfasern und Mischungen hiervon und ganz besonders bevorzugt Glasfasern,
• teilchenförmigen Füllstoffe, bevorzugt ausgewählt aus der Gruppe bestehend aus Dolomit, Silikaten, Quarz, Talkum, Glimmer, Kaolin, Perlit, Kieselerde, gefällte oder pyrogene Kieselsäuren, Kieselgur, Titandioxid, Magnesiumcarbonat, Magnesiumhydroxid, Aluminiumhydroxyd, gemahlenem oder gefälltem Calciumcarbonat, Zinkoxid, Zinksulfid, Kreide, Kalk, Kalksteinmehl, Schiefermehl, Feldspat, Bariumcarbonat, Bariumsulfat, synthetischen Schichtsilikaten, natürlichen Schichtsilikaten, permanentmagnetischen oder magnetisierbaren Metallen oder Legierungen, Glasflakes, Glaskugeln, Hohlglaskugeln, hohlkugeligen Silikatfüllstoffen und Mischungen hiervon, besonders bevorzugt ausgewählt aus der Gruppe bestehend aus Silikaten, Talkum, Glimmer, Kaolin, Titandioxid, gemahlenem oder gefälltem Calciumcarbonat, Kreide, Kalksteinmehl, Schiefermehl, synthetischen Schichtsilikaten, natürlichen Schichtsilikaten, Glasflakes, Glaskugeln, Hohlglaskugeln und Mischungen hiervon sowie
• Mischungen hiervon,
(C) 0,01 bis 3,0 Gew.-% mindestens eines unsubstituierten oder substituierten Metallocens,
(D) 0 bis 35 Gew.-% mindestens eines Zusatzstoffes ausgewählt aus der Gruppe bestehend aus sich von der Komponente (C) unterscheidenden anorganischen Stabilisatoren, organischen Stabilisatoren, insbesondere Antioxidantien, Antiozonantien, Lichtschutzmitteln, UV-Stabilisatoren, UV-Absorbern oder UV-Blockern, IR-Absorbern, NIR-Absorbern, Antiblockmitteln, Nukleierungsmitteln, Kristallisationsbeschleunigern, Kristallisationsverzögerern, kettenverlängernden Additiven, Leitfähigkeitsadditiven, Trennmitteln, Gleitmitteln, Farbstoffen, Markierungsmitteln, anorganischen Pigmenten, organischen Pigmenten, Ruß, Graphit, Kohlenstoffnanoröhrchen, Graphen, photochromen Agenzien, Antistatika, Entformungsmitteln, optischen Aufhellern, halogenfreien Flammschutzmitteln, metallischen Pigmenten, Metallflittern, metallbeschichteten Partikeln und deren Mischungen.
wobei sich die Komponenten (A) bis (D) auf 100 Gew.-% ergänzen.

2. Polyamid-Formmasse nach Anspruch 1,
**dadurch gekennzeichnet, dass** das mindestens eine teilkristalline, teilaromatische Polyamid (A1) mindestens eine der folgenden Eigenschaften aufweist:
• eine relative Viskosität (RV), gemessen nach EN ISO 307 (2007), von 1,45 bis 2,10, bevorzugt von 1,50 bis 1,90, besonders bevorzugt von1,55 bis 1,80,
• eine Schmelzwärme, gemessen nach EN ISO 11357-3 (2013), von mindestens 25 J/g, bevorzugt mindestens 30 J/g, besonders bevorzugt mindestens 35 J/g,
• eine Schmelztemperatur, gemessen nach EN ISO 11357-3 (2013), von mindestens 255 °C, bevorzugt 270 °C bis 350 °C, besonders bevorzugt von 280 bis 340 °C.

3. Polyamid-Formmasse nach einem der Ansprüche 1 oder 2,
**dadurch gekennzeichnet, dass** ist das mindestens eine teilkristalline, teilaromatische Polyamid (A1) gebildet ist aus den Monomeren (a1.1) bis (a1.2) und gegebenenfalls (a1.3)und gegebenenfalls (a1.4):
(a1.1) mindestens eines Diamins, ausgewählt aus der Gruppe bestehend aus 1,4-Butandiamin, 1,5-Pentandiamin, 1,6-Hexandiamin, 1,8-Octandiamin, 1,9-Nonandiamin, 1,10-Decandiamin, 1,12-Dodecandiamin, 2-Methyl-1,5-Pentandiamin, 2-Methyl-1,8-octandiamin, Bis(4-amino-cyclohexyl)methan, Bis(4-amino-3-methyl-cyclohexyl)methan, Bis(4-amino-3,5-dimethyl-cyclohexyl)methan, Bis(aminomethyl)cyclohexan, Isophorondiamin, m-Xylylendiamin und p-Xylylendiamin, und
(a1.2) mindestens einer aromatischen Dicarbonsäure, ausgewählt aus der Gruppe bestehend aus Terephthalsäure, Isophthalsäure und Naphthalindicarbonsäure, und/oder
(a1.3) mindestens einer Dicarbonsäure, ausgewählt aus der Gruppe bestehend aus 1,6-Hexandisäure, 1,9-Nonandisäure, 1,10-Decandisäure, 1,12-Dodecandisäure, 1,13-Tridecandisäure, 1,14-Tetradecandisäure, 1,15-Pentadecansäure, 1,16-Hexadecandisäure, 1,17-Heptadecandisäure, 1,18-Octadecandisäure, Cyclohexandicarbonsäure und dimere Fettsäure mit 36 oder 44 C-Atomen, und/oder
(a1.4) einem oder mehreren Lactamen oder ω-Aminosäuren, ausgewählt aus der Gruppe bestehend aus Lactam-6, Lactam-11, Lactam-12, 1,6-Aminohexansäure, 1,11-Aminoundecansäure und 1,12-Aminododecansäure.

4. Polyamid-Formmasse nach einem der Ansprüche 1 bis 3,
**dadurch gekennzeichnet, dass** das mindestens eine teilkristalline, teilaromatische Polyamid (A1) ausgewählt ist aus der Gruppe bestehend aus:
• PA 4T/66, PA 4T/6T, PA 4T/8T, PA 6T/8T, PA 4T/MPMDT, PA 4T/6T/MPMDT, PA 4T/4I, PA 4T/6I, PA 5T/5I, PA 6T/MPMDT, PA 6T/MPMDT/6I, PA 6T/6I, PA 6T/66, PA 6T/6, PA 6T/12, PA 6T/66/6, PA 6T/610, PA 6T/612, PA 6T/10I, PA 6T/9T, PA 6T/12T, PA 6T/6I/6, PA 6T/6I/66, PA 6T/6I/612, PA 6T/6I/12, PA 9T/MODT, PA 9T/9I, PA 10T, PA 12T, PA 12T/12I, PA 10T/1012, PA 10T/6T, PA 10T/10I, PA10T/106, PA10T/12, PA10T/11, PA 10T/6T/612, PA 10T/6T/10I/6I, PA 10T/6T/1012/612, PA 6T/BACT, PA 6T/BACT/66, PA 6T/6I/BACT/BACI, PA 6T/BACT/MACMT, PA 6T/BACT/PACMT, PA 6T/BACT/TMDCT, PA 4T/6T/8T, PA 4T/6T/10T, PA 4T/8T/10T und PA 6T/8T/10T,
• bevorzugt ausgewählt aus der Gruppe bestehend aus PA 6T/MPMDT, PA 6T/6I, PA 6T/66, PA 6T/6, PA 6T/12, PA 6T/66/6, PA 6T/6I/6, PA 6T/6I/66, PA 6T/6I/612, PA 9T/MODT, PA 10T, PA 12T, PA 10T/1012, PA 10T/6T, PA 10T/10I, PA 10T/6T/612, PA 10T/6T/10I/6I, PA 10T/6T/1012/612, PA 6T/BACT, PA 6T/BACT/66, PA 6T/BACT/MACMT und PA 6T/BACT/PACMT,
• besonders bevorzugt ausgewählt aus der Gruppe bestehend aus PA 6T/6I, PA 6T/66, PA 6T/66/6, PA 6T/6I/66, PA 6T/6I/612, PA 10T/1012, PA 10T/6T, PA 10T/6T/612, PA 10T/6T/10I/6I, PA 10T/6T/1012/612, PA 6T/BACT und PA 6T/BACT/66.

5. Polyamid-Formmasse nach einem der Ansprüche 1 bis 4,
**dadurch gekennzeichnet, dass** das mindestens eine teilkristalline, teilaromatische Polyamid (A1) frei von Lactamen und ω-Aminosäuren ist.

6. Polyamid-Formmasse nach einem der Ansprüche 1 bis 5,
**dadurch gekennzeichnet, dass** das teilkristalline, teilaromatische Polyamid (A1) PA 6T/66 ist, gebildet aus:
• 50 Mol-% 1,6-Hexandiamin,
• 14 bis 40 Mol-%, bevorzugt 20 bis 35 Mol-%, besonders bevorzugt 25 bis 30 Mol-% Terephthalsäure, und
• 10 bis 36 Mol-%, bevorzugt 15 bis 30 Mol-%, besonders bevorzugt 20 bis 25 Mol-% 1,6-Hexansäure.

7. Polyamid-Formmasse nach einem der Ansprüche 1 bis 6,
**dadurch gekennzeichnet, dass** mindestens eine caprolactamhaltige Polyamid (A2) bevorzugt mindestens 60 Gew.-%, besonders bevorzugt mindestens 70 Gew.-% und ganz besonders bevorzugt mindestens 80 Gew.-% Caprolactam enthält oder hieraus besteht.

8. Polyamid-Formmasse nach einem der Ansprüche 1 bis 7,
**dadurch gekennzeichnet, dass** das mindestens eine caprolactamhaltige Polyamid (A2) ausgewählt aus der Gruppe bestehend aus:
• PA 6, PA 6/12, PA 6/6T, PA 6/6I, PA 6/66, PA 6/610, PA 6/612, PA 6/616, PA 6/10T, PA 6/10I, PA 6/106, PA 6/1010, PA 6/1012, PA 6/1016, PA 6/611, PA 6/1011, PA 6/126, PA 6/12T, PA 6/12I, PA 6/1210, PA 6/1212, PA 6/1216, PA 6/66/69, PA 6/66/610, PA 6/66/6T, PA 6/66/6I, PA 6/66/612, PA 6/66/616, PA 6/6T/69, PA 6/6T/610, PA 6/6T/6I, PA 6/6T/612, PA 6/6T/616, PA 6/6I/69, PA 6/6I/610, PA 6/6I/612 und PA 6/6I/616,
• bevorzugt ausgewählt aus der Gruppe bestehend aus PA 6, PA 6/12, PA 6/6T, PA 6/6I, PA 6/66, PA 6/610, PA 6/612, PA 6/616, PA 6/10T, PA 6/10I, PA 6/106, PA 6/1010, PA 6/1012, PA 6/1016, PA 6/611, PA 6/1011, PA 6/126, PA 6/12T, PA 6/12I, PA 6/1210, PA 6/1212und PA 6/1216,
• besonders bevorzugt ausgewählt aus der Gruppe bestehend aus PA 6, PA 6/12, PA 6/6T, PA 6/6I, PA 6/66, PA 6/610, PA 6/612, PA 6/616, PA 6/10T und PA 6/10I.

9. Polyamid-Formmasse nach einem der Ansprüche 1 bis 8,
**dadurch gekennzeichnet, dass** das mindestens eine caprolactamhaltige Polyamid (A2) eine relative Viskosität (RV), gemessen nach EN ISO 307 (2007) im Bereich von 1,6 bis 3,0, bevorzugt im Bereich von 1,7 bis 2,5 und besonders bevorzugt im Bereich von 1,8 bis 2,2 aufweist.

10. Polyamid-Formmasse nach einem der Ansprüche 1 bis 9,
**dadurch gekennzeichnet, dass** das mindestens eine substitutierte oder unsubstituierte Metallocen eine Schmelztemperatur von 120 °C bis 350 °C, bevorzugt 140 °C bis 320 °C, besonders bevorzugt 150 bis 280 °C besitzt.

11. Polyamid-Formmasse nach einem der Ansprüche 1 bis 10,
**dadurch gekennzeichnet, dass** das mindestens eine substitutierte oder unsubstituierte Metallocen als zentrales Metallatom ein Metall der Gruppe 3 bis 12 oder der Lanthanoiden aufweist, bevorzugt Vanadium, Chrom, Mangan, Eisen, Kobalt, Nickel, Ruthenium, Osmium, Zink, Rhodium, Cadmium, Iridium, Magnesium, Lanthan, Cer, Samarium, Zirkon, Scandium, Yttrium und Kombinationen hiervon, besonders bevorzugt unsubstituierte oder substituierte Bis(η⁵-cyclopentadienyl)eisen, insbesondere ausgewählt aus der Gruppe bestehend aus Ferrocen, 3-Carboxybutyryl-ferrocen, 3-Carboxypropionylferrocen, 6-Mercaptohexylferrocen, Aminomethylferrocene, Dimethylaminomethylferrocen, Diphenylphosphinoferrocen, 1-Ferrocenacrylonitril, 1-Ferrocenylethanol, 1,1'-Bis(1-Hydroxyethyl)ferrocen, 1,1'-Diacetylferrocen, 1,1'-Diamino-ferrocen, 1,1'-Dibenzoylferrocen, 1,1'-Dibutylferrocen, 1,1'-Diethyl-ferrocen, 1,1'-Dihexylferrocen, 1,1'-Dimethylferrocen, 1,1'-Divinyl-ferrocen, 1,1'-Ferrocendicarboxaldehyd, 1,1'-Ferrocendicarboxamid, 1,1'-Ferrocendicarbonsäure, 1,1'-Ferrocendimethanol, 1,1'-Ferrocenyl-essigsäure, 1,1'-Ferrocenylpropansäure, 1,1'-Ferrocenylbutansäure, 1,1'-Ferrocenylpentansäure, 1,2,3,4,5-Pentamethylferrocen, 2-Ferrocenylethanol, 3-Ferrocenylpropanol, 3-Ferrocenylpropansäure, 4-Ferrocenylbutansäure, 5-Ferrocenylpentansäure, Acetylferrocen, α-(N,N-Dimethylamino)ethylferrocen, Aminoferrocen, Ethylferrocen, Ferrocenylessigsäure, Ferrocenylmethanol, Octylferrocen, Ferrocencarbonsäure, Ferrocencarboxamid, Ferrocencarboxaldehyd, Propylferrocen, Hexylferrocen, Hydroxyethylferrocen, Benzoylferrocen, Butylferrocen, Methylferrocen, Vinylferrocen und Bis(pentamethyl-cyclopentadienyl)eisen(II).

12. Polyamid-Formmasse nach einem der Ansprüche 1 bis 11,
**dadurch gekennzeichnet, dass** die Polyamid-Formmasse von 35 bis 84,87 Gew.-% der Komponente (A), von 15 bis 60 Gew.-% der Komponente (B), von 0,03 bis 2,0 Gew.-% der Komponente (C) und von 0,1 bis 30 Gew.-% der Komponente (D) enthält oder daraus besteht, insbesondere von 44,6 bis 69,6 Gew.-% der Komponente (A), von 30 bis 50 Gew.-% der Komponente (B), von 0,1 bis 1,5 Gew.-% der Komponente (C) und von 0,3 bis 25 Gew.-% der Komponente (D) enthält oder daraus besteht

13. Formkörper herstellbar aus einer Polyamid-Formmasse nach einem der Ansprüche 1 bis 12.

14. Formkörper nach Anspruch 13 in Form eines Bauteils aus den Bereichen Automobil, insbesondere im Motorraum, Elektro, Elektronik, Maschinenbau, Energieerzeugung und Energieversorgung, insbesondere Zylinderkopfhauben, Motorabdeckungen, Gehäusen und Teilen für Ladeluftkühler, Ladeluftkühlerklappen, Ansaugrohren, insbesondere Ansaugkrümmern, Abgasleitungen, Konnektoren, Zahnräder, Lüfterräder, Kühlwasserkästen, Gehäusen oder Teilen von Wärmetauschern, Kühlmittelkühler, Thermostaten, Wasserpumpen, Heizkörpern, Befestigungsteilen, Leiterplatten, Folien, Leitungen, Gehäusen und Teilen von Elektro/Elektronikgeräten, Gehäusen und Teilen von Heizlüftern, Schaltern, Verteilern, Relais, Widerständen, Kondensatoren, Spulen, Lampen, Dioden, LEDs, Transistoren, Konnektoren, Reglern, Speichern und Sensoren.

15. Verwendung einer Polyamid-Formmasse nach einem der Ansprüche 1 bis 12 zur Herstellung von Bauteilen für die Bereiche Automobil, insbesondere im Motorraum, Elektro, Elektronik, Maschinenbau, Energieerzeugung und Energieversorgung, insbesondere Zylinderkopfhauben, Motorabdeckungen, Gehäusen und Teilen für Ladeluftkühler, Ladeluftkühlerklappen, Ansaugrohren, insbesondere Ansaugkrümmern, Abgasleitungen, Konnektoren, Zahnräder, Lüfterräder, Kühlwasserkästen, Gehäusen oder Teilen von Wärmetauschern, Kühlmittelkühler, Thermostaten, Wasserpumpen, Heizkörpern, Befestigungsteilen, Leiterplatten, Folien, Leitungen, Gehäusen und Teilen von Elektro/Elektronikgeräten, Gehäusen und Teilen von Heizlüftern, Schaltern, Verteilern, Relais, Widerständen, Kondensatoren, Spulen, Lampen, Dioden, LEDs, Transistoren, Konnektoren, Reglern, Speichern und Sensoren.

## Claims

1. A polyamide moulding compound, comprising or consisting of:
(A) 27 to 89.99 wt.% of at least one semi-crystalline, semi-aromatic polyamide (A1) or a polyamide mixture consisting of
(A1) at least one semi-crystalline, semi-aromatic polyamide, and
(A2) at least one caprolactam-containing polyamide with a content of caprolactam of at least 50 wt.%, different from the semi-crystalline, semi-aromatic polyamide (A1),
the caprolactam content, in relation to the polyamide mixture, being 5 to 38 wt.%,
(B) 10 to 65 wt. percent of at least one filler selected from the group consisting of
• fibrous or needle-shaped fillers, preferably selected from the group consisting of glass fibres, carbon fibres, basalt fibres, boron fibres, slag fibres, metal fibres, whiskers, mineral fibres, wollastonite, aramid fibres, ground glass fibres, ground carbon fibres, ground mineral fibres and mixtures hereof, more preferably selected from the group consisting of glass fibres, carbon fibres, basalt fibres, boron fibres, aramid fibres and mixtures hereof and even more preferably glass fibres,
• particulate fillers, preferably selected from the group consisting of dolomite, silicates, quartz, talc, mica, kaolin, perlite, silica, precipitated or fumed silicas, diatomaceous earth, titanium dioxide, magnesium carbonate, magnesium hydroxide, aluminum hydroxide, ground or precipitated calcium carbonate, zinc oxide, zinc sulphide, chalk, lime, limestone powder, slate powder, feldspar, barium carbonate, barium sulfate, synthetic phyllosilicates, natural phyllosilicates, permanent-magnetic or magnetisable metals or alloys, glass flakes, glass spheres, hollow glass spheres, hollow-sphere silicate fillers, and mixtures thereof, more preferably selected from the group consisting of silicates, talc, mica, kaolin, titanium dioxide, ground or precipitated calcium carbonate, chalk, limestone powder, slate powder, synthetic phyllosilicates, natural phyllosilicates, glass flakes, glass spheres, hollow glass spheres and mixtures thereof and
• mixtures thereof,
(C) 0.01 to 3.0 wt.% of at least one unsubstituted or substituted metallocene,
(D) 0 to 35 wt.-% of at least one additive selected from the group consisting of inorganic stabilisers other than component (C), organic stabilisers- in particular antioxidants, antiozonants, light stabilisers, UV stabilisers, UV absorbers or UV blockers, IR absorbers, NIR absorbers, anti-block agents, nucleation agents, crystallisation accelerators, crystallisation retardants, chain-extending additives, conductivity additives, separating agents, lubricants, dyes, markers, inorganic pigments, organic pigments, carbon black, graphite, carbon nanotubes, graphene, titanium dioxide, zinc sulphide, zinc oxide, barium carbonate, barium sulphate, photochromic agents, antistatic agents, release agents, optical brighteners, halogen-free flame retardants, metallic pigments, metal flakes, metal-coated particles and mixtures thereof,
the components (A) to (D) adding up to 100 wt.%.

2. The polyamide moulding compound according to claim 1,
**characterised in that** the at least one semi-crystalline, semi-aromatic polyamide (A1) has at least one of the following properties:
• a relative viscosity (RV), measured according to EN ISO 307 (2007), of 1.45 to 2.10, preferably of 1.50 to 1.90, more preferably of 1.55 to 1.80,
• a heat of fusion, as measured according to EN ISO 11357-3 (2013), of at least 25 J/g, preferably at least 30 J/g, and particularly preferably at least 35 J/g,
• a melting temperature, as measured according to EN ISO 11357-3 (2013), of at least 255°C, preferably 270°C to 350°C, and particularly preferably of 280 to 340°C.

3. The polyamide moulding compound according to any one of claims 1 or 2,
**characterised in that** the at least one semi-crystalline, semi-aromatic polyamide (A1) is formed from the monomers (a1.1) to (a1.2) and optionally (a1.3) and optionally (a1.4):
(a1.1) at least one diamine selected from the group consisting of 1.4-butanediamine, 1.5-pentanediamine, 1.6-hexanediamine, 1.8-octanediamine, 1.9-nonanediamine, 1.10-decanediamine, 1.12-dodecanediamine, 2-methyl-1.5-pentanediamine, 2-methyl-1.8-octanediamine, bis(4-amino-cyclohexyl)methane, bis(4-amino-3-methyl-cyclohexyl)methane, bis(4-amino-3,5-dimethylcyclohexyl)methane, bis(aminomethyl)cyclohexane, isophoronediamine, m-xylylenediamine and p-xylylenediamine, and
(a1.2) at least one aromatic dicarboxylic acid selected from the group consisting of terephthalic acid, isophthalic acid, and naphthalenedicarboxylic acid, and/or
(a1.3) at least one dicarboxylic acid selected from the group consisting of 1.6-hexanedioic acid, 1.9-nonanedioic acid, 1.10-decanedioic acid, 1.12-dodecanedioic acid, 1.13-tridecanedioic acid, 1,14-tetradecanedioic acid, 1.15-pentadecandoic acid, 1.16-hexadecanedioic acid, 1.17-heptadecanedioic acid, 1.18-octadecanedioic acid, cyclohexanedicarboxylic acid and dimeric fatty acid having 36 or 44 C atoms, and/or
(a1.4) one or more lactams or ω-amino acids, selected from the group consisting of lactam 6, lactam 11, lactam 12.1, 6-aminohexanoic acid, 1.11-aminoundecanoic acid, and 1.12-aminododecanoic acid.

4. The polyamide moulding compound according to any one of claims 1 to 3,
**characterised in that** the at least one semi-crystalline, semi-aromatic polyamide (A1) is selected from the group consisting of:
• PA 4T/66, PA 4T/6T, PA 4T/8T, PA 6T/8T, PA 4T/MPMDT, PA 4T/6T/MPMDT, PA 4T/4I, PA 4T/6I, PA 5T/5I, PA 6T/MPMDT, PA 6T/MPMDT/6I, PA 6T/6I, PA 6T/66, PA 6T/6, PA 6T/12, PA 6T/66/6, PA 6T/610, PA 6T/612, PA 6T/10I, PA 6T/9T, PA 6T/12T, PA 6T/6I/6, PA 6T/6I/66, PA 6T/6I/612, PA 6T/6I/12, PA 9T/MODT, PA 9T/9I, PA 10T, PA 12T, PA 12T/12I, PA 10T/1012, PA 10T/6T, PA 10T/10I, PA10T/106, PA10T/12, PA1OT/11, PA 10T/6T/612, PA 10T/6T/10I/6I, PA 10T/6T/1012/612, PA 6T/BACT, PA 6T/BACT/66, PA 6T/6I/BACT/BACI, PA 6T/BACT/MACMT, PA 6T/BACT/PACMT, PA 6T/BACT/TMDCT, PA 4T/6T/8T, PA 4T/6T/10T, PA 4T/8T/10T und PA 6T/8T/10T,
• preferably selected from the group consisting of PA 6T/MPMDT, PA 6T/6I, PA 6T/66, PA 6T/6, PA 6T/12, PA 6T/66/6, PA 6T/6I/6, PA 6T/6I/66, PA 6T/6I/612, PA 9T/MODT, PA 10T, PA 12T, PA 10T/1012, PA 10T/6T, PA 10T/10I, PA 10T/6T/612, PA 10T/6T/10I/6I, PA 10T/6T/1012/612, PA 6T/BACT, PA 6T/BACT/66, PA 6T/BACT/MACMT and PA 6T/BACT/PACMT,
• more preferably selected from the group consisting of PA 6T/6I, PA 6T/66, PA 6T/66/6, PA 6T/6I/66, PA 6T/6I/612, PA 10T/1012, PA 10T/6T, PA 10T/6T/612, PA 10T/6T/10I/6I, PA 10T/6T/1012/612, PA 6T/BACT and PA 6T/BACT/66.

5. The polyamide moulding compound according to any one of claims 1 to 4,
**characterised in that** the at least one semi-crystalline, semi-aromatic polyamide (A1) is free from lactams and w-amino acids.

6. The polyamide moulding compound according to any one of claims 1 to 5,
**characterised in that** the semi-crystalline, semi-aromatic polyamide is (A1) PA 6T/66, formed from:
• 50 mol% 1.6-hexanediamine,
• 14 to 40 mol%, preferably 20 to 35 mol%, more preferably 25 to 30 mol% terephthalic acid, and
• 10 to 36 mol%, preferably 15 to 30 mol%, more preferably 20 to 25 mol% 1,6-hexanoic acid.

7. The polyamide moulding compound according to one of claims 1 to 6,
**characterised in that** at least one caprolactam-containing polyamide (A2) preferably comprises or consists of at least 60 wt.%, more preferably at least 70 wt.% and even more preferably at least 80 wt.% caprolactam.

8. The polyamide moulding compound according to any one of claims 1 to 7,
**characterised in that** the at least one caprolactam-containing polyamide (A2) is selected from the group consisting of:
• PA 6, PA 6/12, PA 6/6T, PA 6/61, PA 6/66, PA 6/610, PA 6/612, PA 6/616, PA 6/10T, PA 6/101, PA 6/106, PA 6/1010, PA 6/1012, PA 6/1016, PA 6/611, PA 6/1011, PA 6/126, PA 6/12T, PA 6/121, PA 6/1210, PA 6/1212, PA 6/1216, PA 6/66/69, PA 6/66/610, PA 6/66/6T, PA 6/66/61, PA 6/66/612, PA 6/66/616, PA 6/6T/69, PA 6/6T/610, PA 6/6T/6I, PA 6/6T/612, PA 6/6T/616, PA 6/61/69, PA 6/61/610, PA 6/61/612 and PA 6/61/616,
• preferably selected from the group consisting of PA 6, PA 6/12, PA 6/6T, PA 6/61, PA 6/66, PA 6/610, PA 6/612, PA 6/616, PA 6/10T, PA 6/101, PA 6/106, PA 6/1010, PA 6/1012, PA 6/1016, PA 6/611, PA 6/1011, PA 6/126, PA 6/12T, PA 6/121, PA 6/1210, PA 6/1212and PA 6/1216,
• more preferably selected from the group consisting of PA 6, PA 6/12, PA 6/6T, PA 6/61, PA 6/66, PA 6/610, PA 6/612, PA 6/616, PA 6/10T and PA 6/101.

9. The polyamide moulding compound according to any one of claims 1 to 8,
**characterised in that** the at least one caprolactam-containing polyamide (A2) has a relative viscosity (RV), measured according to EN ISO 307 (2007) in the range of 1.6 to 3.0, preferably in the range of 1.7 to 2.5 and more preferably in the range of 1.8 to 2.2.

10. The polyamide moulding compound according to any one of claims 1 to 9,
**characterised in that** the at least one substituted or unsubstituted metallocene has a melting temperature of 120°C to 350°C, preferably 140°C to 320°C, and particularly preferably 150 to 280°C.

11. The polyamide moulding compound according to one of claims 1 to 10,
**characterised in that** the at least one substituted or unsubstituted metallocene comprises, as a central metal atom, a metal from group 3 to 12 or the lanthanides, preferably vanadium, chromium, manganese, iron, cobalt, nickel, ruthenium, osmium, zinc, rhodium, cadmium, iridium, magnesium, lanthanum, cerium, samarium, zirconium, scandium, yttrium, and combinations thereof, and particularly preferably unsubstituted or substituted bis(η⁵-cyclopentadienyl)iron compounds, in particular selected from the group consisting of ferrocene, 3-carboxybutyryl-ferrocene, 3-carboxypropionyl-ferrocene, 6-mercaptohexylferrocene, aminomethylferrocene, dimethylaminomethylferrocene, diphenylphosphinoferrocene, 1-ferrocenacrylonitrile, 1-ferrocenylethanol, 1.1'-bis(1-hydroxyethyl)ferrocene, 1,1'-diacetylferrocene, 1.1'-diaminoferrocene, 1.1'-dibenzoylferrocene, 1.1'-dibutylferrocene, 1.1'-diethylferrocene, 1,1'-dihexylferrocene, 1.1'-dimethylferrocene, 1.1'-divinylferrocene, 1.1'-ferrocene dicarboxaldehyde, 1.1'-ferrocene dicarboxamide, 1.1'-ferrocene dicarboxylic acid, 1.1'-ferrocene dimethanol, 1.1'-ferrocenylacetic acid, 1.1'-ferrocenylpropanoic acid, 1.1'-ferrocenylbutanoic acid, 1.1'-ferrocenylpentanoic acid, 1,2,3,4,5-pentamethylferrocene,
2-ferrocenylethanol, 3-ferrocenylpropanol, 3-ferrocenylpropanoic acid, 4-ferrocenylbutanoic acid, 5-ferrocenylpentanoic acid, acetylferrocene, a-(N,N-dimethylamino)ethylferrocene, aminoferrocene, ethylferrocene,
ferrocenylacetic acid, ferrocenylmethanol, octylferrocene, ferrocene carboxylic acid, ferrocene carboxamide, ferrocene carboxaldehyde, propylferrocene, hexylferrocene, hydroxyethylferrocene, benzoylferrocene,
butylferrocene, methylferrocene, vinylferrocene, and bis(pentamethylcyclopentadienyl)iron(II).

12. The polyamide moulding compound according to any one of claims 1 to 11,
**characterised in that** the polyamide moulding compound comprises or consists of 35 to 84.87 wt.% of component (A), or 15 to 60 wt.% of component (B), of 0.03 to 2.0 wt.% of component (C), and of 0.1 to 30 wt.% of component (D), in particular comprises or consists of 44.6 to 69.6 wt.% of component (A), of 30 to 50 wt.% of component (B), of 0.1 to 1.5 wt.% of component (C), and of 0.3 to 25 wt.% of component (D).

13. A moulded body that can be manufactured from a polyamide moulding compound in accordance with one of the claims 1 to 12.

14. A moulded body according to claim 13 in the form of a component used in the automotive industry,particularly in the engine compartment, in the electrical, electronics, mechanical engineering, power generation, and power supply sectors, specifically cylinder head covers, engine covers, housings, and parts for intercoolers, intercooler flaps, intake pipes, in particular, intake manifolds, exhaust pipes, connectors, gears, fan blades, coolant reservoirs, housings or parts of heat exchangers, coolant radiators, thermostats, water pumps, radiators, fasteners, printed circuit boards, films, cables, housings and parts of electrical/electronic devices, housings and parts of space heaters, switches, distributors, relays, resistors, capacitors, coils, lamps, diodes, LEDs, transistors, connectors, controllers, storage devices, and sensors.

15. Use of a polyamide moulding compound according to one of claims 1 to 12 for manufacturing components for the automotive field, particularly in the engine compartment, for the electrical engineering, electronics, mechanical engineering, energy production and energy supply sectors, particularly cylinder head covers, engine covers, housings and parts for intercoolers, intercooler valves, intake pipes, in particular intake manifolds, exhaust gas lines, connectors, gearwheels, fan impellers, cooling water tanks, housings or parts of heat exchangers, coolant coolers, thermostats, water pumps, heating elements, fastening parts, printed circuit boards, films, lines, housings and parts of electrical/electronic devices, housings and parts of heater fans, switches, distributors, relays, resistors, capacitors, coils, lamps, diodes, LEDs, transistors, connectors, controllers, storage devices and sensors.

## Revendications

1. Masse de moulage en polyamide contenant, ou constituée de :
(A) entre 27 et 89,99 % en poids d'au moins un polyamide semi-cristallin et semi-aromatique (A1) ou d'un mélange de polyamides constitué de
(A1) au moins un polyamide semi-cristallin et semi-aromatique et
(A2) au moins un polyamide contenant du caprolactame avec une teneur en caprolactame d'au moins 50 % en poids, différent du polyamide semi-cristallin et semi-aromatique (A1),
dans laquelle la teneur en caprolactame, par rapport au mélange de polyamide, est compris entre 5 et 38 % en poids,
(B) entre 10 et 65 % en poids d'au moins une charge choisie parmi le groupe constitué des
• charges fibreuses ou en forme d'aiguilles, de manière préférée choisies parmi le groupe constitué des fibres de verre, des fibres de carbone, des fibres de basalte, des fibres de bore, des fibres de laitier, des fibres métalliques, des trichites, des fibres minérales, de la wollastonite, des fibres d'aramide, des fibres de verre broyées, des fibres de carbone broyées, des fibres minérales broyées et de leurs mélanges, et de manière particulièrement préférée choisies parmi le groupe constitué des fibres de verre, des fibres de carbone, des fibres de basalte, des fibres de bore, des fibres d'aramide et de leurs mélanges, et de la manière la plus particulièrement préférée des fibres de verre,
• des charges particulaires, de manière préférée choisies parmi le groupe constitué de la dolomite, des silicates, du quartz, du talc, du mica, du kaolin, de la perlite, de la silice, des silices précipitées ou pyrogénés, de la terre de diatomées, du dioxyde de titane, du carbonate de magnésium, de l'hydroxyde de magnésium, de l'hydroxyde d'aluminium, du carbonate de calcium broyé ou précipité, de l'oxyde de zinc, du sulfure de zinc, de la craie, de la chaux, de la farine de calcaire, de la farine d'ardoise, du feldspath, du carbonate de baryum, du sulfate de baryum, des phyllosilicates synthétiques, des phyllosilicates naturels, des métaux ou alliages magnétiques permanents ou magnétisables, des flocons de verre, des billes de verre, des billes de verre creuses, des charges de silicate sphériques creuses et de leurs mélanges, et de manière particulièrement préférée choisies parmi le groupe constitué des silicates, du talc, du mica, du kaolin, du dioxyde de titane, du carbonate de calcium broyé ou précipité, de la craie, de la farine de calcaire, de la farine d'ardoise, des phyllosilicates synthétiques, des phyllosilicates naturels, des flocons de verre, des billes de verre, des billes de verre creuses et de leurs mélanges, ainsi que
• de leurs mélanges,
(C) entre 0,01 et 3,0 % en poids d'au moins un métallocène non substitué ou substitué,
(D) entre 0 et 35 % en poids d'au moins un additif choisi parmi le groupe constitué des stabilisants inorganiques, des stabilisants organiques, en particulier des antioxydants, des antiozonants, des agents de protection contre la lumière, des stabilisants UV, des absorbeurs ou bloqueurs d'UV, des absorbeurs d'IR, des absorbeurs de NIR, des agents anti-agglutination, des agents de nucléation, des accélérateurs de cristallisation, des retardateurs de cristallisation, des additifs d'allongement de chaîne, des additifs de conductivité, des agents de démoulage, des lubrifiants, des colorants, des agents de marquage, des pigments inorganiques, des pigments organiques, du noir de carbone, du graphite, des nanotubes de carbone, du graphène, des agents photochromiques, des agents antistatiques, des agents de démoulage, des azurants optiques, des retardateurs de flamme exempts d'halogène, des pigments métalliques, des paillettes métalliques, des particules enrobées de métal et de leurs mélanges, qui diffèrent du composant (C),
dans laquelle les composants (A) à (D) se complètent mutuellement jusqu'à obtenir 100 % en poids.

2. Masse de moulage en polyamide selon la revendication 1,
**caractérisée en ce que** le au moins une polyamide semi-cristallin et semi-aromatique (A1) présente au moins une des propriétés ci-dessous :
• une viscosité relative (RV), mesurée selon la norme EN ISO 307 (2007), comprise entre 1,45 et 2,10, de manière préférée comprise entre 1,50 et 1,90, de manière particulièrement préférée comprise entre 1,55 et 1,80,
• une chaleur de fusion, mesurée selon la norme EN ISO 11357-3 (2013), d'au moins 25 J/g, de manière préférée d'au moins 30 J/g, de manière particulièrement préférée d'au moins 35 J/g,
• une température de fusion, mesurée selon la norme EN ISO 11357-3 (2013), d'au moins 255°C, de manière préférée comprise entre 270°C et 350°C, de manière particulièrement préférée comprise entre 280°C et 340°C.

3. Masse de moulage en polyamide selon l'une quelconque des revendications 1 ou 2,
**caractérisée en ce que** le au moins un polyamide semi-cristallin et semi-aromatique (A1) est formé à partir des monomères (a1.1) à (a1.2) et éventuellement (a1.3) et éventuellement (a1.4) :
(a1.1) au moins une diamine choisie parmi le groupe constitué de la 1,4-butanediamine, de la 1,5-pentanediamine, de la 1,6-hexanediamine, de la 1,8-octanediamine, de la 1,9-nonanediamine, de la 1,10-décanediamine, de la 1,12-dodécanediamine, de la 2-méthyl-1,5-pentanediamine, de la 2-méthyl-1,8-octanediamine, du bis(4-aminocyclohexyl)méthane, du bis(4-amino-3-méthylcyclohexyl)méthane, du bis(4-amino-3,5-diméthylcyclohexyl)méthane, du bis(aminométhyl)cyclohexane, de l'isophoronediamine, de la m-xylylènediamine et de la p-xylylènediamine, et
(a1.2) au moins un acide dicarboxylique aromatique choisi parmi le groupe constitué de l'acide téréphtalique, de l'acide isophtalique et de l'acide naphtalènedicarboxylique, et/ou
(a1.3) au moins un acide dicarboxylique choisi parmi le groupe constitué de l'acide 1,6-hexanedioïque, de l'acide 1,9-nonanedioïque, de l'acide 1,10-décanedioïque, de l'acide 1,12-dodécanedioïque, de l'acide 1,13-tridécanedioïque, de l'acide 1,14-tétradécanedioïque, de l'acide 1,15-pentadécanoïque, de l'acide 1,16-hexadécanedioïque, de l'acide 1,17-heptadécanedioïque, de l'acide 1,18-octadécanedioïque, de l'acide cyclohexanedicarboxylique et des acides gras dimère comprenant 36 ou 44 atomes de carbone, et/ou
(a1.4) un ou plusieurs lactame(s) ou acide(s) ω-aminé(s) choisi(s) parmi le groupe constitué du lactame-6, du lactame-11, du lactame-12, de l'acide 1,6-aminohexanoïque, de l'acide 1,11-aminoundécanoïque et de l'acide 1,12-aminododécanoïque.

4. Masse de moulage en polyamide selon l'une quelconque des revendications 1 à 3,
**caractérisée en ce que** le au moins un polyamide semi-cristallin et semi-aromatique (A1) est choisi parmi le groupe constitué de :
• PA 4T/66, PA 4T/6T, PA 4T/8T, PA 6T/8T, PA 4T/MPMDT, PA 4T/6T/MPMDT, PA 4T/4I, PA 4T/6I, PA 5T/5I, PA 6T/MPMDT, PA 6T/MPMDT/6I, PA 6T/6I, PA 6T/66, PA 6T/6, PA 6T/12, PA 6T/66/6, PA 6T/610, PA 6T/612, PA 6T/10I, PA 6T/9T, PA 6T/12T, PA 6T/6I/6, PA 6T/6I/66, PA 6T/6I/612, PA 6T/6I/12, PA 9T/MODT, PA 9T/9I, PA 10T, PA 12T, PA 12T/12I, PA 10T/1012, PA 10T/6T, PA 10T/10I, PA10T/106, PA10T/12, PA10T/11, PA 10T/6T/612, PA 10T/6T/10I/6I, PA 10T/6T/1012/612, PA 6T/BACT, PA 6T/BACT/66, PA 6T/6I/BACT/BACI, PA 6T/BACT/MACMT, PA 6T/BACT/PACMT, PA 6T/BACT/TMDCT, PA 4T/6T/8T, PA 4T/6T/10T, PA 4T/8T/10T et PA 6T/8T/10T,
• de manière préférée choisi parmi le groupe constitué de PA 6T/MPMDT, PA 6T/61, PA 6T/66, PA 6T/6, PA 6T/12, PA 6T/66/6, PA 6T/6I/6, PA 6T/6I/66, PA 6T/6I/612, PA 9T/MODT, PA 10T, PA 12T, PA 10T/1012, PA 10T/6T, PA 10T/101, PA 10T/6T/612, PA 10T/6T/10I/6I, PA 10T/6T/1012/612, PA 6T/BACT, PA 6T/BACT/66, PA 6T/BACT/MACMT et PA 6T/BACT/PACMT,
• de manière particulièrement préférée choisi parmi le groupe constitué de PA 6T/6I, PA 6T/66, PA 6T/66/6, PA 6T/6I/66, PA 6T/6I/612, PA 10T/1012, PA 10T/6T, PA 10T/6T/612, PA 10T/6T/10I/6I, PA 10T/6T/1012/612, PA 6T/BACT et PA 6T/BACT/66.

5. Masse de moulage en polyamide selon l'une quelconque des revendications 1 à 4,
**caractérisée en ce que** le au moins un polyamide semi-cristallin et semi-aromatique (A1) est exempt de lactames et d'acides ω-aminés.

6. Masse de moulage en polyamide selon l'une quelconque des revendications 1 à 5,
**caractérisée en ce que** le polyamide semi-cristallin et semi-aromatique (A1) est du PA 6T/66, constitué de :
• 50 % mol de 1,6-hexanediamine,
• entre 14 et 40 % mol, de manière préférée entre 20 et 35 % mol, de manière particulièrement préférée entre 25 et 30 % mol d'acide téréphtalique, et
• entre 10 et 36 % mol, de manière préférée entre 15 et 30 % mol, de manière particulièrement préférée entre 20 et 25 % mol d'acide 1,6-hexanedioïque.

7. Masse de moulage en polyamide selon l'une quelconque des revendications 1 à 6,
**caractérisée en ce que** le au moins un polyamide contenant du caprolactame (A2) contient de manière préférée au moins 60 % en poids, de manière particulièrement préférée au moins 70 % en poids et de la manière la plus particulièrement préférée au moins 80 % en poids de caprolactame ou est constitué de celui-ci.

8. Masse de moulage en polyamide selon l'une quelconque des revendications 1 à 7,
**caractérisée en ce que** le au moins un polyamide contenant du caprolactame (A2) est choisi parmi le groupe constitué de :
• PA 6, PA 6/12, PA 6/6T, PA 6/61, PA 6/66, PA 6/610, PA 6/612, PA 6/616, PA 6/10T, PA 6/101, PA 6/106, PA 6/1010, PA 6/1012, PA 6/1016, PA 6/611, PA 6/1011, PA 6/126, PA 6/12T, PA 6/121, PA 6/1210, PA 6/1212, PA 6/1216, PA 6/66/69, PA 6/66/610, PA 6/66/6T, PA 6/66/61, PA 6/66/612, PA 6/66/616, PA 6/6T/69, PA 6/6T/610, PA 6/6T/6I, PA 6/6T/612, PA 6/6T/616, PA 6/61/69, PA 6/61/610, PA 6/61/612 et PA 6/61/616,
• de manière préférée choisi parmi le groupe constitué de PA 6, PA 6/12, PA 6/6T, PA 6/61, PA 6/66, PA 6/610, PA 6/612, PA 6/616, PA 6/10T, PA 6/101, PA 6/106, PA 6/1010, PA 6/1012, PA 6/1016, PA 6/611, PA 6/1011, PA 6/126, PA 6/12T, PA 6/121, PA 6/1210, PA 6/1212 et PA 6/1216,
• de manière particulièrement préférée choisi parmi le groupe constitué de PA 6, PA 6/12, PA 6/6T, PA 6/61, PA 6/66, PA 6/610, PA 6/612, PA 6/616, PA 6/10T et PA 6/101.

9. Masse de moulage en polyamide selon l'une quelconque des revendications 1 à 8,
**caractérisée en ce que** le au moins un polyamide contenant du caprolactame (A2) a une viscosité relative (RV), mesurée selon la norme EN ISO 307 (2007), située dans la plage comprise entre 1,6 et 3,0, de manière préférée dans la plage comprise entre 1,7 et 2,5 et de manière particulièrement préférée dans la plage comprise entre 1,8 et 2,2.

10. Masse de moulage en polyamide selon l'une quelconque des revendications 1 à 9,
**caractérisée en ce que** le au moins un métallocène substitué ou non substitué présente une température de fusion comprise entre 120°C et 350°C, de manière préférée comprise entre 140°C et 320°C, de manière particulièrement préférée comprise entre 150°C et 280°C.

11. Masse de moulage en polyamide selon l'une quelconque des revendications 1 à 10,
**caractérisée en ce que** le au moins un métallocène substitué ou non substitué présente en tant qu'atome métallique central un métal des groupes 3 à 12 ou des lanthanides, de manière préférée le vanadium, le chrome, le manganèse, le fer, le cobalt, le nickel, le ruthénium, l'osmium, le zinc, le rhodium, le cadmium, l'iridium, le magnésium, le lanthane, le cérium, le samarium, le zirconium, le scandium, l'yttrium, et leurs combinaisons, de manière particulièrement préférée le bis(η⁵-cyclopentadiényl)fer non substitué ou substitué, en particulier choisi parmi le groupe constitué du ferrocène, du 3-carboxybutyrylferrocène, du 3-carboxypropionylferrocène, du 6-mercaptohexylferrocène, de l'aminométhylferrocène, du diméthylaminométhylferrocène, du diphénylphosphinoferrocène, du 1-ferrocénacrylonitrile, du 1-ferrocényléthanol, du 1,1'-bis(1-hydroxyéthyl)ferrocène, du 1,1'-diacétylferrocène, du 1,1'-diaminoferrocène, du 1,1'-dibenzoylferrocène, du 1,1'-dibutylferrocène, du 1,1'-diéthylferrocène, du 1,1'-dihexylferrocène, du 1,1'-diméthylferrocène, du 1,1'-divinylferrocène, du 1,1'-ferrocènedicarboxaldéhyde, du 1,1'-ferrocènedicarboxamide, de l'acide 1,1'-ferrocènedicarboxylique, du 1,1'-ferrocènediméthanol, de l'acide 1,1'-ferrocénylacétique, de l'acide 1,1'-ferrocénylpropanoïque, de l'acide 1,1'-ferrocénylbutanoïque, de l'acide 1,1'-ferrocénylpentanoïque, du 1,2,3,4,5-pentaméthylferrocène,
du 2-ferrocényléthanol, du 3-ferrocénylpropanol, de l'acide 3-ferrocénylpropanoïque, de l'acide 4-ferrocénylbutanoïque, de l'acide 5-ferrocénylpentanoïque, de l'acétylferrocène, de l'α-(N,N-diméthylamino)éthylferrocène, de l'aminoferrocène, de l'éthylferrocène,
de l'acide ferrocénylacétique, du ferrocénylméthanol, de l'octylferrocène, de l'acide ferrocènecarboxylique, du ferrocènecarboxamide, du ferrocènecarboxaldéhyde, du propylferrocène, de l'hexylferrocène, de l'hydroxyéthylferrocène, du benzoylferrocène,
du butylferrocène, du méthylferrocène, du vinylferrocène et du bis(pentaméthyl-cyclopentadiényl)fer(II).

12. Masse de moulage en polyamide selon l'une quelconque des revendications 1 à 11,
**caractérisée en ce que** la masse de moulage en polyamide contient, ou est constituée de, entre 35 et 84,87 % en poids du composant (A), entre 15 et 60 % en poids du composant (B), entre 0,03 et 2,0 % en poids du composant (C) et entre 0,1 et 30 % en poids du composant (D), en particulier entre 44,6 et 69,6 % en poids du composant (A), entre 30 et 50 % en poids du composant (B), entre 0,1 et 1,5 % en poids du composant (C) et entre 0,3 et 25 % en poids du composant (D).

13. Corps moulé pouvant être produit à partir d'une masse de moulage en polyamide selon l'une quelconque des revendications 1 à 12.

14. Corps moulé selon la revendication 13, sous la forme d'un composant relevant des domaines de l'automobile, en particulier pour le compartiment moteur, l'électrotechnique, l'électronique, la mécanique, la production et la distribution d'énergie, en particulier des couvre-culasses, des cache-culbuteurs, des carters, et des pièces pour des refroidisseurs d'air de suralimentation, des volets de refroidisseur d'air de suralimentation, des tuyaux d'admission, en particulier des collecteurs d'admission, des conduites d'échappement, des connecteurs, des engrenages, des roues de ventilateur, des réservoirs de liquide de refroidissement, des carters ou des pièces d'échangeurs de chaleur, des radiateurs de liquide de refroidissement, des thermostats, des pompes à eau, des radiateurs de chauffage, des pièces de fixation, des circuits imprimés, des films, des câbles, des carters et des pièces d'appareils électriques/électroniques, des carters et des pièces de chauffages soufflants, des interrupteurs, des répartiteurs, des relais, des résistances, des condensateurs, des bobines, des lampes, des diodes, des LED, des transistors, des connecteurs, des régulateurs, des accumulateurs et des capteurs.

15. Utilisation d'une masse de moulage en polyamide selon l'une quelconque des revendications 1 à 12 afin de produire des composants pour les domaines de l'automobile, en particulier pour le compartiment moteur, l'électrotechnique, l'électronique, la mécanique, la production et la distribution d'énergie, en particulier des couvre-culasses, des cache-culbuteurs, des carters, et des pièces pour des refroidisseurs d'air de suralimentation, des volets de refroidisseur d'air de suralimentation, des tuyaux d'admission, en particulier des collecteurs d'admission, des conduites d'échappement, des connecteurs, des engrenages, des roues de ventilateur, des réservoirs de liquide de refroidissement, des carters ou des pièces d'échangeurs de chaleur, des radiateurs de liquide de refroidissement, des thermostats, des pompes à eau, des radiateurs de chauffage, des pièces de fixation, des circuits imprimés, des films, des câbles, des carters et des pièces d'appareils électriques/électroniques, des carters et des pièces de chauffages soufflants, des interrupteurs, des répartiteurs, des relais, des résistances, des condensateurs, des bobines, des lampes, des diodes, des LED, des transistors, des connecteurs, des régulateurs, des accumulateurs et des capteurs.
